# EUROPEAN PATENT SPECIFICATION

(11) **EP 2 932 784 B1**
(45) Date of publication and mention of the grant of the patent: **21.12.2016**
(21) Application number: 13722600.7
(22) Date of filing: 12.04.2013
(51) Int. Cl.: H04W 76/02, H04W 36/00

(54) **NODE APPARATUS AND METHOD FOR ESTABLISHING AUXILIARY BEARERS**
KNOTENVORRICHTUNG UND VERFAHREN ZUM AUFBAUEN NEBENTRÄGER
APPAREIL DE NOEUD ET PROCÉDÉ POUR ÉTABLIR DES PORTEUSES AUXILIAIRES

(30) Priority: 14.12.2012 US 201261737183 P
(43) Date of publication of application: 21.10.2015
(73) Proprietor: Telefonaktiebolaget LM Ericsson (publ), 164 83 Stockholm (SE)
(72) Inventor: WALLENTIN, Pontus, S-582 39 Linköping (SE); GUNNARSSON, Fredrik, S-587 50 Linköping (SE); RUNE, Göran, S-582 52 Linköping (SE)
(74) Representative: Rees, Simon John Lewis
(86) International application number: PCT/SE2013/050397
(87) International publication number: WO 2014/092626

(56) References cited:
- KR-A- 20090 017 186
- US-A1- 2007 156 804
- US-A1- 2012 250 601

## Description

### TECHNICAL FIELD

Example embodiments presented herein are directed towards a base station and communications node (e.g., a wireless device or a Packet Data Network Gateway), and corresponding methods therein, for establishing auxiliary bearers in a communications network.

### BACKGROUND

With the proliferation of user friendly smart phones and tablets, the usage of high data rate services such as video streaming over the mobile network is becoming commonplace, greatly increasing the amount of traffic in mobile networks. Thus, there is a great urgency in the mobile network community to ensure that the capacity of mobile networks keeps increasing along with the ever-increasing user demand. The latest systems such as Long Term Evolution (LTE), especially when coupled with interference mitigation techniques, have spectral efficiencies very close to the theoretical Shannon limit. The continuous upgrading of current networks to support the latest technologies and densifying the number of base stations per unit area are two of the most widely used approaches to meet the increasing traffic demands.

Yet another approach that is gaining high attention is to use Heterogeneous Networks where the traditional pre-planned macro base stations (known as the macro layer) are complemented with several low-powered base stations that may be deployed in a relatively unplanned manner. The 3rd Generation Partnership Project (3GPP) has incorporated the concept of Heterogeneous Networks as one of the core items of study in the latest enhancements of LTE, such as LTE release 11 and several low-powered base stations for realizing heterogeneous networks such as pico base stations, femto base stations (also known as home base stations or HeNBs), relays, and RRHs (remote radio heads) have been defined. The initial discussion for LTE release 12 has already started and one of the proposed items for study is the possibility of serving a user equipment (UE) from more than one eNB simultaneously. The current legacy handover mechanisms of LTE have to be updated in order to support this.

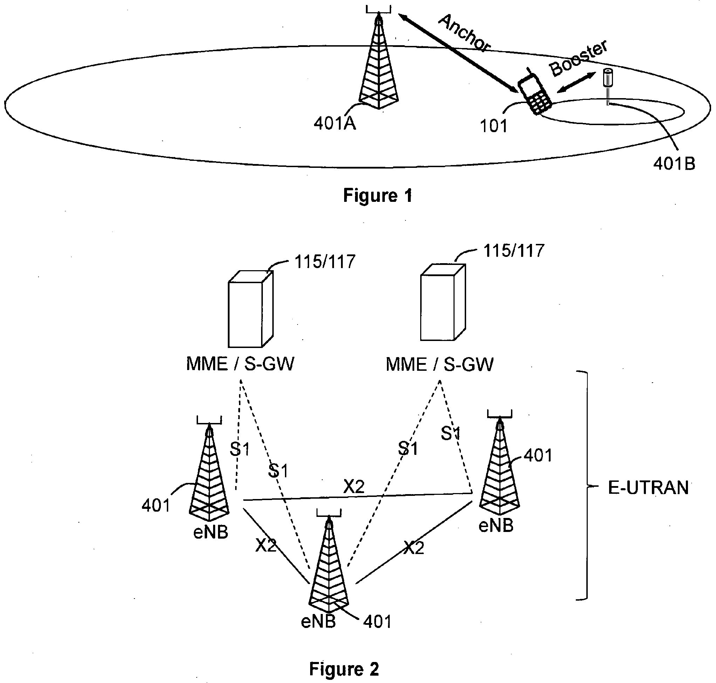

**Figure 1** provides an example of a heterogeneous network where a mobile terminal 101 uses multiple flows, e.g. an anchor flow from the macro base station (or "anchor eNB") 401A and a booster flow from a pico base station (or a "booster eNB") 401 B. One of the problems in using a heterogeneous network is how to map the user plane bearers on the anchor flow and booster flow, respectively. The simple solution is that each bearer is mapped on a single flow, for example, the first bearer uses the anchor flow and the second bearer uses the booster flow.

US 2012/250601 discloses a communication terminal is described comprising a communication module configured to establish an NAS bearer connection between the communication terminal and a core network of a cellular mobile communication network and a controller configured to control the communication terminal to dedicatedly use the NAS bearer connection to exchange data between at least one second communication terminal communicating with the communication terminal and the core network. US 2007/156804 discloses a Dynamic Personal Virtual Mobile Network comprising separate signalling and bearer channel infrastructures to afford greater degree of network engineering and provisioning efficiency.

### SUMMARY

When using a single flow for mapping bearers in a heterogeneous network, several problems exists. An example of such a problem is the need for frequent handovers. In order to keep the user data throughput on acceptable levels, the user plane bearer may need to be "handed over" frequently from the booster flow to the anchor flow or vice versa, depending on radio link conditions and the speed of the mobile terminal. Furthermore, each handover introduces signaling between the network and the mobile terminal and also within the network. With many mobile terminals and pico base stations, the signaling load in the network nodes may become considerate and possibly a limiting factor.

Additionally, during this handover of a user plane bearer, an inevitable "glitch" is introduced in the data flow, since data packets cannot be transmitted during the handover procedure duration. The data flow needs to be routed via the target base station instead of the source base station. Data that resides in the source base station can be forwarded to the target base station via an inter-site interface such as X2. Even though packets eventually will reach the mobile, some services such as real time services that rely on somewhat regular packet transmissions will however be impacted. Hence, frequent handovers for a given mobile terminal may thus have an impact on at least real time services.

Thus, at least one example object of some of the example embodiments presented herein is to provide an efficient means of mapping bearers in a heterogeneous network. At least one example advantage provided by some of the example embodiments is that user data may be mapped on both an anchor and booster flow. The switch of user data packets between the flows may be done almost instantaneously, since the flows are already established and a 'handover' is simply a mapping of a packet onto one of the flows. Therefore, the user data throughput reflects the throughput of the 'best' flow at any given time.

Moreover, by establishing separate bearers for the anchor and booster flows, respectively, the mapping of data can be performed in a central location in the network, for example, locating a MPTCP function in the PDN GW, which relaxes the bandwidth requirements on the expensive inter eNB links. Instead the link from the anchor eNB and booster eNB to the core network is used, which is already present and dimensioned according to the radio capacity of the base station.

It should also be appreciated that by de-coupling the establishment/release of the auxiliary bearer, the handover of the auxiliary bearer between eNBs, and the real-time mapping of user data packets on the bearers, different triggers for those events can be used and the timings of those events can be optimized independently of each other and without decreasing handover performance. For example, establishing an bearer can be considered as a relatively slow and "heavy" procedure, compared with handover of an already established bearer. Since the establishment can be done well before the user equipment actually needs to use the booster eNB, the user equipment can start to use the booster eNB much quicker, once it needs to do that.

Accordingly, some of the example embodiments are directed towards a method, in a base station, for assisting in an establishment of an auxiliary bearer. The base station is comprised in a wireless network. The method comprises identifying a need for establishing an auxiliary bearer to be associated with a pre-existing bearer served by the base station, wherein the auxiliary bearer and the pre-existing bearer are for a user data session, and sending, to a network node, a request to establish the auxiliary bearer.

Optionally, the step of identifying further comprises receiving a request to establish the auxiliary bearer from a wireless terminal, radio controller or mobility management node.

The step of identifying may be based on an evaluation of contents of a bearer establishment request of the pre-existing bearer. The step of identifying may be based on any one or more of:
- wireless terminal measurements;
- a type of service used by the pre-existing bearer;
- a location of a wireless terminal associated with the pre-existing bearer;
- a mobility history of the wireless terminal associated with the pre-existing bearer; and
- a hysteresis load analysis of base stations.

The network node may be a radio controller or a Policy Control and Charging Rules Function, PCRF.

Some of the example embodiments are directed towards a base station for assisting in an establishment of an auxiliary bearer. The base station is comprised in a wireless network. The base station comprises processing circuitry configured to identify a need for establishing an auxiliary bearer to be associated with a pre-existing bearer served by the base station, wherein the auxiliary bearer and the pre-existing bearer are for a user data session. The base station also comprises radio circuitry configured to send, to a network node, a request to establish the auxiliary bearer.

Some of the example embodiments are directed towards a method, in a communications node, for assisting in an establishment of an auxiliary bearer. The communication node is comprised in a wireless network. The method comprises receiving a bearer establishment request and identifying that the bearer establishment request is for an auxiliary bearer. The method further comprises associating the auxiliary bearer with a pre-existing bearer established within the communications node, wherein the auxiliary bearer and the pre-existing bearer are for a user data session.

For example, the communications node may be a wireless terminal and the bearer establishment request may be from a base station. In that case, the method may further comprise sending, to a serving base station, a request for establishing the auxiliary bearer. The step of sending may be performed as a result of any one or more of:
- wireless terminal measurements,
- a type of service used by the pre-existing bearer,
- a location of a wireless terminal associated with the pre-existing bearer; and
- mobility history of the wireless terminal associated with the pre-existing bearer.

The step of identifying may be based on any one or more of:
- a comparison of a Quality of Service, QoS, value of the pre-existing bearer and the auxiliary bearer;
   - a comparison of a Quality of Service Class Identifier, QCI, value of the pre-existing bearer and the auxiliary bearer; and
   - information element comprised in a request for the pre-existing and/or auxiliary bearer.

Some of the example embodiments are also directed towards a communications node for assisting in an establishment of an auxiliary bearer. The communication node is comprised in a wireless network. The communications node comprises radio circuitry configured to receive a bearer establishment request. The communications node also comprises processing circuitry configured to identify the bearer establishment request is for an auxiliary bearer. The processing circuitry is further configured to associate the auxiliary bearer with a pre-existing bearer established within the communications node, wherein the auxiliary bearer and the pre-existing bearer are for a user data session.

### DEFINITIONS

- 3GPP: 3rd Generation Partnership Project
- AA: Application Assurance
- AAA: Authentication, Authorization and Accounting
- AMBR: Aggregate Maximum Bit Rate
- APN: Access Point Name
- ARP: Allocation and Retention Priority
- ARQ: Automatic Repeat reQuest
- BCH: Broadcast Channel
- CIO: Cell Individual Offset
- CN: Core Network
- CRS: Cell specific Reference Symbol
- DL: Downlink
- DM: DeModulation
- DRB: Data Radio Bearer
- E-UTRA: Evolved Universal Terrestrial Radio Access
- E-UTRAN: Evolved UMTS Terrestrial Radio Access Network
- eNB/eNodeB: enhanced Node B(base station)
- EMM: EPS Mobility Management
- EPC: Evolved Packet Core
- EPS: Evolved Packet System
- FDD: Frequency Division Duplex
- GBR: Guaranteed Bit Rate
- HARQ: Hybrid Automatic Repeat reQuest
- HeNB: HomeeNB
- HO: Handover
- IE: Information Element
- IP: Internet Protocol
- LTE: Long Term Evolution
- MAC: Medium Access Control
- MBR: Maximum Bit Rate
- MME: Mobility Management Entity
- MPTCP: Multi-path Transmission Control Protocol
- NAS: Non-Access Stratum
- P-GW: PDN Gateway
- PBCH: Physical Broadcast CHannel
- PCFICH: Physical Control Format Indicator CHannel
- PCI: Physical Cell Identity
- PCRF: Policy Control and Charging Rules Function
- PDCCH: Physical Downlink Control CHannel
- PDCP: Packet Data Convergence Protocol
- PDN: Packet Data Network
- PDSCH: Physical Downlink Shared CHannel
- PDU: Packet Data Unit
- PHICH: Physical Hybrid ARQ Indicator CHannel
- PSS: Primary Synchronization Signal
- QCI: QoS Class Identifier
- QoS: Quality of Service
- RLC: Radio Link Control
- RACH: Random Access CHannel
- RAB: Radio Access Bearer
- RAN: Radio Access Network
- RE: Resource Element
- RLC: Radio Link Control
- RLF: Radio Link Failure
- RRC: Radio Resource Control
- RRH: Remote Radio Head
- RRM: Radio Resource Management
- RS: Reference Signal
- RSCP: Received Signal Code Power
- RSRP: Reference Signal Received Power
- RSRQ: Reference Signal Received Quality
- S-GW: Serving Gateway
- SDF: Service Data Flow
- SDU: Service Data Unit
- SFN: Single Frequency Network
- SINR: Signal to Interference plus Noise Ratio
- SN: Sequence Number
- SRB: Signaling Radio Bearer
- SRC: Smart RAN Controller
- SSS: Secondary Synchronization Signal
- TCP: Transmission Control Protocol
- TEID: Tunneling End IDentity
- TFT: Traffic Flow Template
- TNL: Transport Network Layer
- TTT: Time To Trigger
- UE: User Equipment
- UL: Uplink
- UMTS: Universal Mobile Telecommunications System
- VoIP: Voice Over IP

### BRIEF DESCRIPTION OF THE DRAWINGS

The foregoing will be described in more detail with from the following more particular description of the example embodiments, as illustrated in the accompanying drawings in which like reference characters refer to the same parts throughout the different views. The drawings are not necessarily to scale, emphasis instead being placed upon illustrating the example embodiments.
FIG. 1 is an illustrative example of a heterogeneous deployment with simultaneous anchor and booster flows to a wireless terminal;
FIG. 2 is an illustrative example of E-UTRAN architecture;
FIG. 3 is a schematic depicting the functional split between E-UTRAN and EPC;
FIG. 4 is a user plane protocol stack;
FIG. 5 is a control plane protocol stack;
FIG. 6 is a user plane and control plane data flow;
FIG. 7 is an illustrative example of bearer service architecture;
FIG. 8 is an illustrative example of a heterogeneous deployment with a higher-power macro node and a lower-power pico node;
FIG. 9 is an illustrative example of a heterogeneous deployment where the pico node corresponds to a cell of its own;
FIG. 10 is an illustrative example of a heterogeneous deployment where the pico node does not correspond to a cell of its own;
FIG. 11 is a depiction of SFN operation with identical transmission from macro and pico to a terminal;
FIG. 12 is a depiction of soft cell operation with the wireless terminal having multiple connections with both the anchor and booster base stations;
FIG. 13 is a messaging diagram of a X2 handover procedure in E-UTRAN as described in 3GPP TS 36.000, section 10.1.2.1.1;
FIG. 14 is an illustrative example of user data mapping between a primary and auxiliary bearer, according to some of the example embodiments;
FIGS. 15 and 16 are network diagrams depicting the establishment of an auxiliary bearer, according to some of the example embodiments;
FIG. 17 is a messaging diagram corresponding to the system illustrated in FIG. 15, according to some of the example embodiments;
FIG. 18 is a flow diagram illustrating various triggering modes, according to some of the example embodiments;
FIG. 19 is an example node configuration of a base station, according to some of the example embodiments;
FIG. 20 is an example node configuration of a communications node (e.g., a wireless terminal or PGW), according to some of the example embodiments;
FIG. 21 is a flow diagram depicting example operations which may be taken by the base station of FIG. 19; and
FIG. 22 is a flow diagram depicting example operations which may be taken by the communications node of FIG. 20.

### DETAILED DESCRIPTION

In the following description, for purposes of explanation and not limitation, specific details are set forth, such as particular components, elements, techniques, etc. in order to provide a thorough understanding of the example embodiments presented herein. However, the example embodiments may be practiced in other manners that depart from these specific details. In other instances, detailed descriptions of well-known methods and elements are omitted so as not to obscure the description of the example embodiments.

### General overview

In order to better explain the example embodiments presented herein, a problem will first be identified and discussed. The Evolved UMTS Terrestrial Radio Access Network (E-UTRAN) comprise base stations 401 called enhanced NodeBs (eNBs or eNodeBs), providing the E-UTRA user plane and control plane protocol terminations towards the user equipment. The base stations or eNBs 401 are interconnected with each other by means of the X2 interface. The eNBs 401 are also connected by means of the S1 interface to the EPC (Evolved Packet Core), more specifically to the MME (Mobility Management Entity) 115 by means of the S1-MME interface and to the Serving Gateway (SGW) 117 by means of the S1-U interface. The S1 interface supports many-to-many relation between MMEs / SGWs and eNBs. The E-UTRAN architecture is illustrated in **Figure 2****.**

The eNB 401 hosts functionalities such as Radio Resource Management (RRM), radio bearer control, admission control, header compression of user plane data towards serving gateway, routing of user plane data towards the serving gateway. The MME 115 is the control node that processes the signaling between the user equipment and the CN. The main functions of the MME 115 are related to connection management and bearer management, which are handled via Non Access Stratum (NAS) protocols. The SGW 117 is the anchor point for user equipment mobility, and also comprises other functionalities such as temporary DL data buffering while the user equipment 101 is being paged, packet routing and forwarding the right eNB, gathering of information for charging and lawful interception. The PDN Gateway (PGW) 119 is the node responsible for user equipment IP address allocation, as well as Quality of Service (QoS) enforcement (this is explained further in later sections).

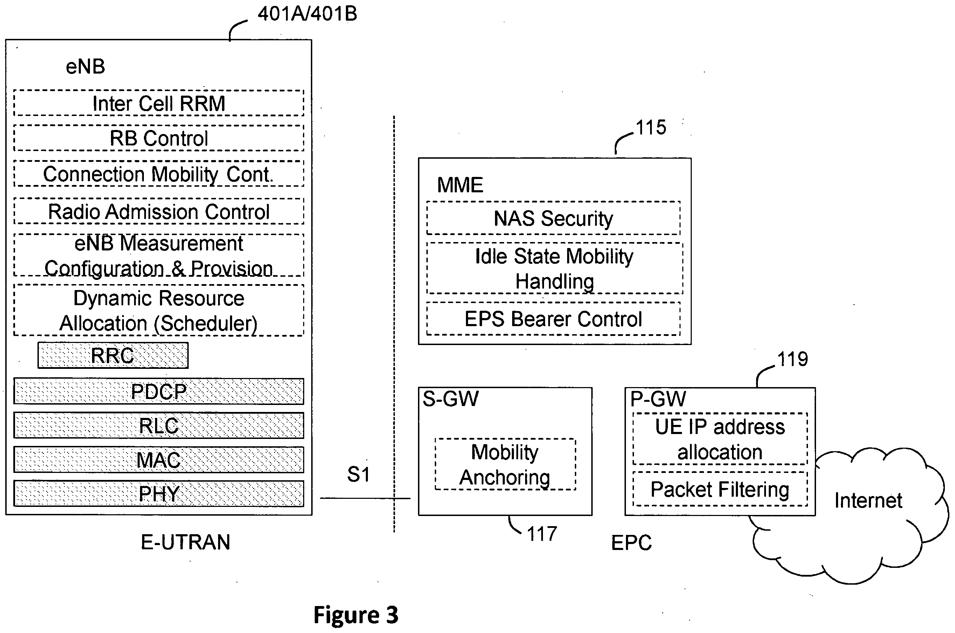

**Figure 3** gives a summary of the functionalities of the different nodes, referred to in 3GPP TS 36.300 and the references therein providing the details of the functionalities of the different nodes. In Figure 3, the solid lined boxes depict the logical nodes, dashed boxes depict the functional entities of the control plane and cross-hatched boxes depict the radio protocol layers.

### Radio protocol architecture

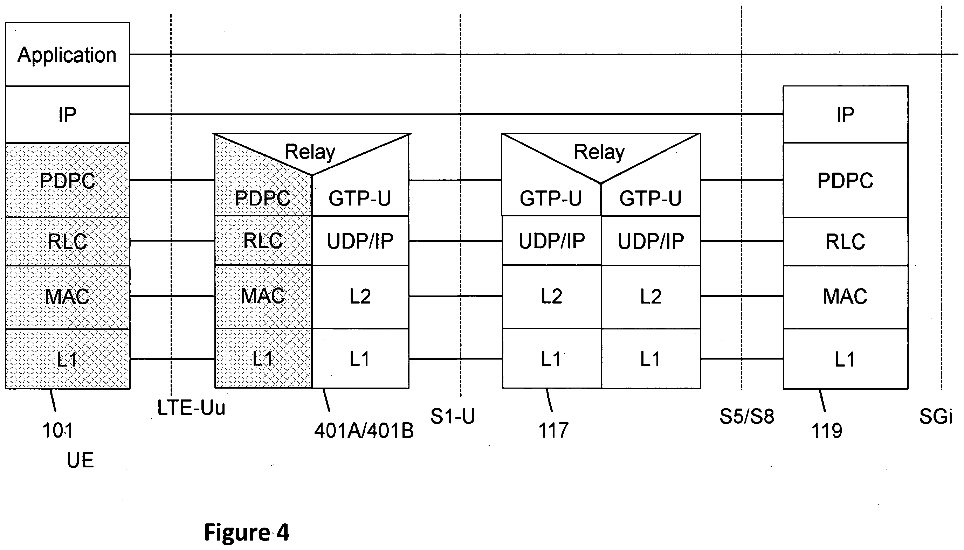

The radio protocol architecture of E-UTRAN is divided into the user plane and the control plane. **Figure 4** shows the protocol stack for the user-plane. The user plane protocol stack is comprised of the Packet Data Convergence Protocol (PDCP), Radio Link Control (RLC), and Medium Access Control (MAC), which are terminated at the eNB 401. The PDCP manages IP packets in the user plane and it performs functionalities such as header compression, security, and re-ordering and retransmission during handover. The RLC layer is mainly responsible for segmentation (and corresponding assembly) of PDCP packets, in order that they fit the size that is actually to be transmitted over the air interface. RLC can operate either in unacknowledged mode or acknowledged mode, where the latter supports retransmissions. The MAC layer performs multiplexing of data from different radio bearers, and it is the one that informs the RLC about the size of the packets to provide, which is decided based on the required QoS of each radio bearer and the current capacity available to the user equipment 101.

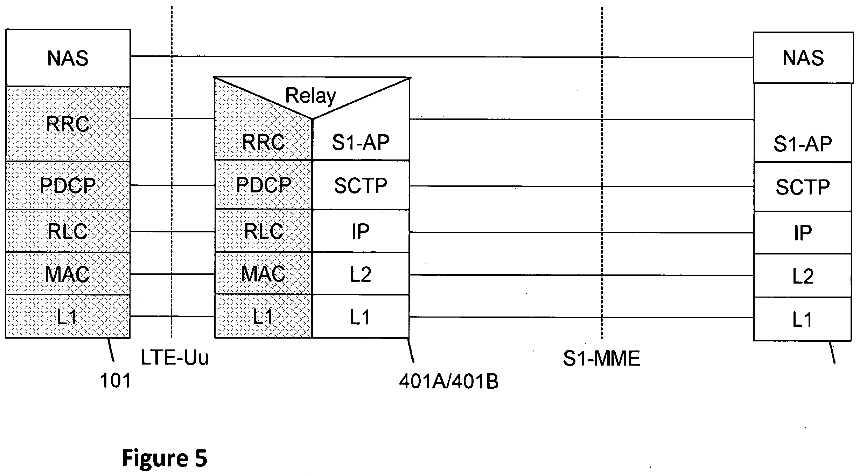

**Figure 5** shows the control plane protocol stack. The layers below the Radio Resource Control (RRC) layer perform the same functionality as in the user plane except that there is no header compression in the control plane. The main functions of the RRC are the broadcasting of system information, RRC connection control (establishment, modification, and release of RRC connection, establishment of signaling radio bearers (SRB) and data radio bearers (DRBs), handover, configuration of lower protocol layers, radio link failure recovery, etc.), and measurement configuration and reporting. The details of the RRC protocol functionalities and procedures may be found in 3GPP TS 36.331.

A user equipment or wireless terminal 101 in general is uniquely identified over the S1 interface within an eNB 401 with the eNB UE S1AP ID. When an MME 115 receives an eNB UE S1AP ID it stores it for the duration of the user equipment -associated logical S1-connection for this user equipment 101. Once known to an MME 115 this IE is comprised in all user equipment associated S1-AP signaling. The eNB UE S1AP ID is unique within the eNB 401, and user equipments are assigned new S1AP ID after a handover by the target eNB.

From the MME side, a user equipment 101 is uniquely identified using the MME UE S1AP ID. When an eNB 401 receives an MME UE S1AP ID it stores it for the duration of the user equipment -associated logical S1 connection for this user equipment 101. Once known to an eNB 401 this IE is comprised in all user equipment associated S1-AP signaling. The MME UE S1AP ID is unique within the MME 115, and it is changed if the user equipment's MME changes, for example, handover between two eNBs connected to different MMEs.

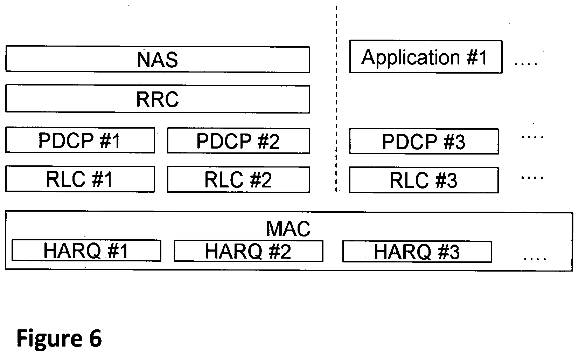

The flow of user plane and control plane data is illustrated in Figure 6. There is only one MAC entity per user equipment 101 (unless the user equipment supports multiple carriers as in the case of carrier aggregation) and under this MAC entity, several Hybrid ARQ (HARQ) processes might be running simultaneously for rapid retransmissions. There is a separate RLC entity for each radio bearer and if the radio bearer is configured to use PDCP, there is also one separate PDCP entity for that bearer. A bearer is configured to use PDCP only if it is dedicated to a user equipment (i.e., multicast and broadcast data do not utilize PDCP both in the control and user plane and the PDCP is used only for dedicated control message in the control plane and for dedicated UUDL data in the user plane).

At the transmitting side each layer receives a Service Data Unit (SDU) from a higher layer, and sends a Protocol Data Unit (PDU) to the lower layer. For example, PDCP PDUs are sent towards the RLC, and they are RLC SDUs from RLC point of view, which in turn sends RLC PDUs towards the MAC, which are MAC SDUs from the MAC point of view. At the receiving end, the process is reversed, i.e. each layer passing SDUs to the layer above it, where they are perceived as PDUs.

### Quality of Service

A user equipment 101 may have multiple applications running at the same time, each having different QoS requirements, for example, VoIP, browsing, file download, etc. In order to support these different requirements, different bearers are set up, each being associated with a QoS. An EPS bearer/E-RAB (Radio Access Bearer) is the level of granularity for bearer level QoS control in the EPC/E-UTRAN. That is, Service Data Flows (SDF) mapped to the same EPS bearer receive the same bearer level packet forwarding treatment (e.g., scheduling policy, queue management policy, rate shaping policy, RLC configuration, etc.).

One EPS bearer/E-RAB is established when the user equipment 101 connects to a PDN, and that remains established throughout the lifetime of the PDN connection to provide the user equipment 101 with always-on IP connectivity to that PDN. That bearer is referred to as the default bearer. Any additional EPS bearer/E-RAB that is established to the same PDN is referred to as a dedicated bearer. The initial bearer level QoS parameter values of the default bearer are assigned by the network, based on subscription data. The decision to establish or modify a dedicated bearer may only be taken by the EPC, and the bearer level QoS parameter values are always assigned by the EPC.

An EPS bearer/E-RAB is referred to as a GBR bearer if dedicated network resources related to a Guaranteed Bit Rate (GBR) value that is associated with the EPS bearer/E-RAB are permanently allocated (e.g., by an admission control function in the eNB) at bearer establishment/modification. Otherwise, an EPS bearer/E-RAB is referred to as a Non-GBR bearer. A dedicated bearer may either be a GBR or a Non-GBR bearer while a default bearer shall be a Non-GBR bearer.

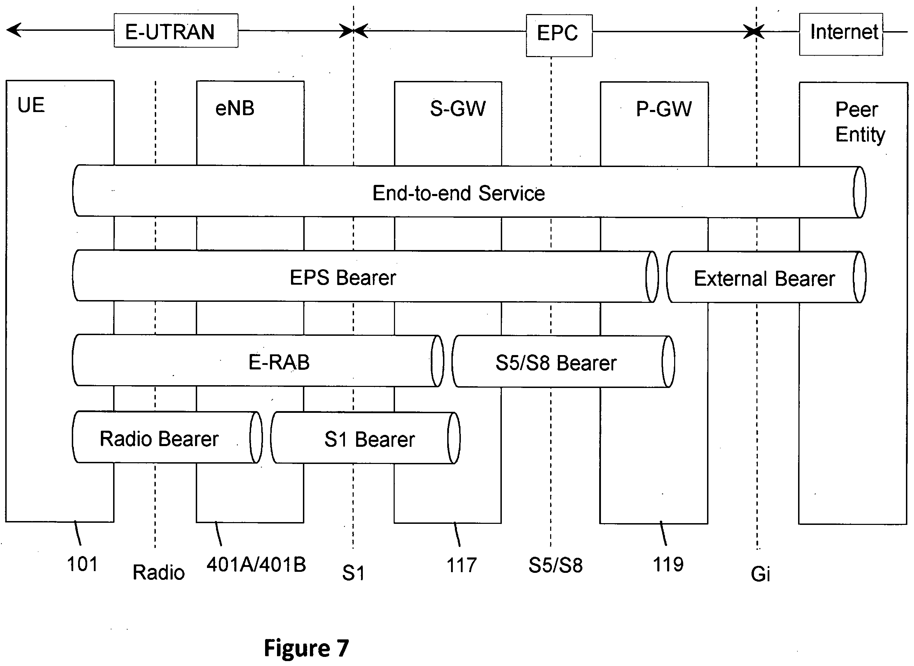

The EPS bearer service architecture is shown in Figure 7. The packets of an EPS bearer are transported over a radio bearer between the user equipment 101 and eNB 401. An S1 bearer transports the packets of an EPS bearer between the eNB 401 and SGW 117. An E-RAB is actually a concatenation of these two bearers (i.e., radio bearer and S1 bearer), and the two bearers are mapped on a one to one fashion. An S5/S8 bearer transports the packets of the EPS bearer between the SGW 117 and PGW 119, and completes the EPS bearer. Here also there is a one to one mapping between the E-RAB and S5/S8 bearer.

The bearer level (i.e., per bearer or per bearer aggregate) QoS parameters are QCI, ARP, GBR, and AMBR. Each EPS bearer/E-RAB (GBR and Non-GBR) is associated with the following bearer level QoS parameters: QCI and ARP. QoS Class Identifier (QCI) is a scalar that is used as a reference to access node-specific parameters that control bearer level packet forwarding treatment (e.g., scheduling weights, admission thresholds, queue management thresholds, link layer protocol configuration, etc.), and that has been preconfigured by the operator owning the eNodeB 401. The QCI may also be used to reference node-specific parameters that control bearer level packet forwarding treatment in the other nodes in the user plain chain, for example, the PGW 119 and the SGW 117. Nine QCI values are standardized, the detailed requirements of these classes may be found in 3GPP TS 23.203. Allocation and Retention Priority (ARP) is used to decide whether a bearer establishment / modification request may be accepted or needs to be rejected in case of resource limitations. In addition, the ARP may be used by the eNodeB 401, SGW 117 or PGW 119 to decide which bearer(s) to drop during exceptional resource limitations (e.g., at handover).

Each GBR bearer is additionally associated with the bearer level QoS parameters GBR and MBR. Guaranteed Bit Rate (GBR) is the bit rate that may be expected to be provided by a GBR bearer. Maximum Bit Rate (MBR) is the maximum bit rate that may be expected to be provided by a GBR bearer. MBR can be greater or equal to the GBR.

Each APN access, by a user equipment 101, is associated with a per-APN Aggregate Maximum Bit Rate (APN-AMBR). The APN-AMBR sets the limit on the aggregate bit rate that may be expected to be provided across all Non GBR bearers and across all PDN connections of the same APN. Each user equipment 101 in state EMM-REGISTERED is associated with the bearer aggregate level QoS parameter known as per user equipment Aggregate Maximum Bit Rate (UE-AMBR). The UE AMBR limits the aggregate bit rate that may be expected to be provided across all Non GBR bearers of a user equipment 101.

### Heterogeneous networks and soft/shared cells

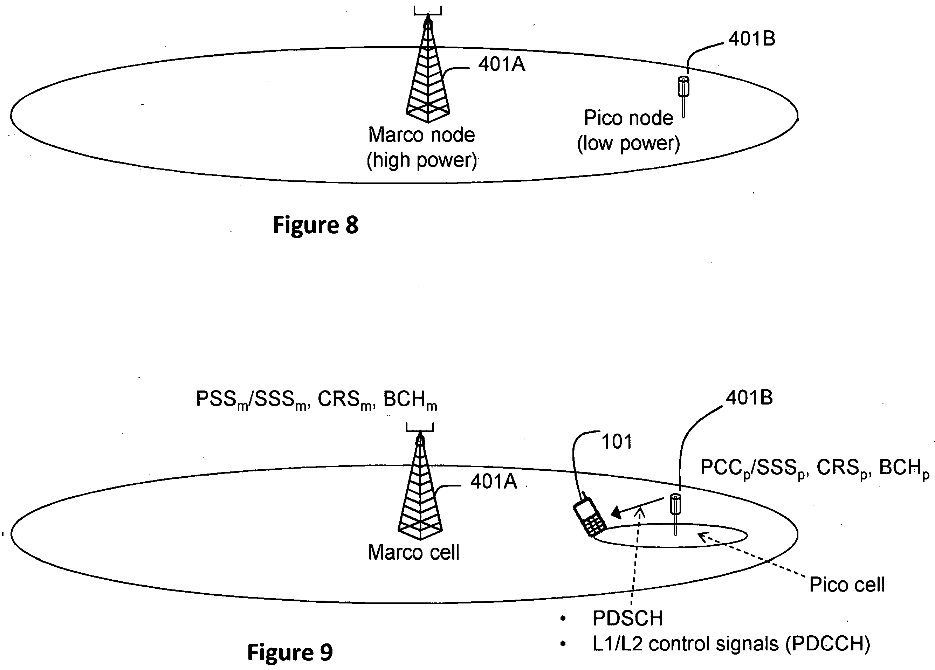

The use of a so called heterogeneous deployment or heterogeneous network, as illustrated in **Figure 8****,** comprising network transmission nodes with different transmit power operating and with overlapping coverage areas, is considered to be an interesting deployment strategy for cellular networks. In such a deployment, the low-power nodes ("pico nodes"), which may be utilized as booster base stations 401 B, are typically assumed to offer high data rates (Mbit/s), as well as provide high capacity (users/m2 or Mbit/s/m2), in the local areas where this is needed/desired, while the high-power nodes ("macro nodes"), which may be utilized as anchor base stations 401A, are assumed to provide full-area coverage. In practice, the macro nodes 401A may correspond to currently deployed macro cells while the pico nodes 401 B are later deployed nodes, extending the capacity and/or achievable data rates within the macro-cell coverage area where needed.

A pico node 401 B of a heterogeneous deployment may correspond to a cell of its own (a "pico cell"), as illustrated in Figure 9. This means that, in addition to downlink and uplink data transmission/reception, the pico node also transmits the full set of common signals/channels associated with a cell. In the LTE context this comprises Primary and Secondary Synchronization Signals (PSS and SSS) corresponding to the Physical Cell Identity of the pico cell. Also comprised are Cell-specific reference signals (CRS), also corresponding to the Physical Cell Identity of the cell. The CRS may, for example, be used for downlink channel estimation to enable coherent demodulation of downlink transmissions. Further comprised is the Broadcast channel (BCH), with corresponding pico-cell system information.

As the pico node 401 B transmits the common signals/channels, the corresponding pico cell may be detected and selected (e.g., connected to) by a terminal (UE, user equipment) 101. If the pico node 401 B corresponds to a cell of its own, also so-called L1/L2 control signaling on the PDCCH (as well as PCFICH and PHICH) are transmitted from the pico node to connected terminals, in addition to downlink data transmission on the PDSCH. The L1/L2 control signaling, for example, provides downlink and uplink scheduling information and Hybrid-ARQ-related information to terminals within the cell. This is shown in **Figure 9**.

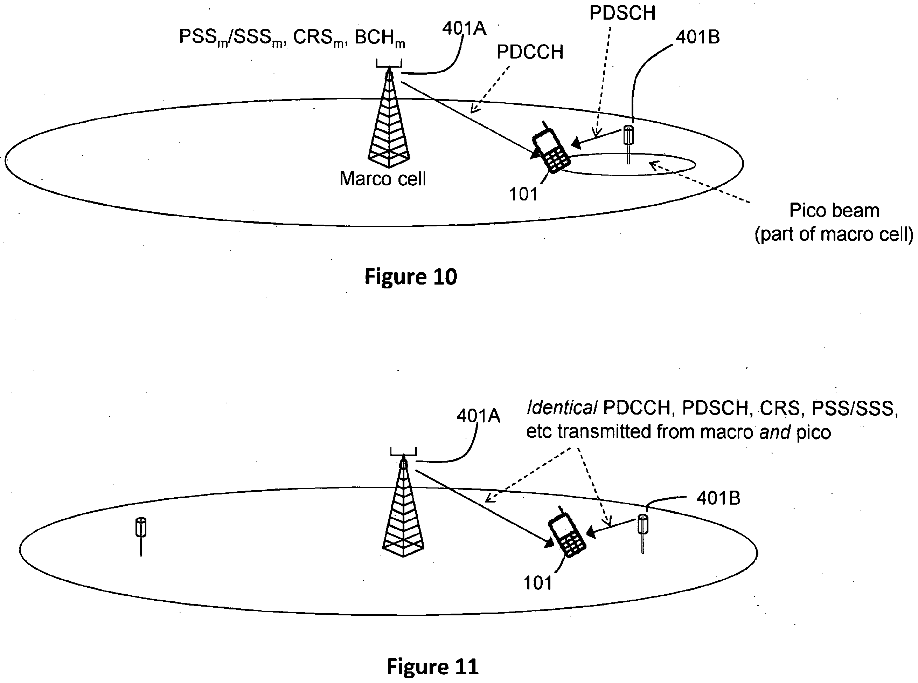

Alternatively, a pico node 401 B within a heterogeneous deployment may not correspond to a cell of its own but may just provide a data-rate and capacity "extension" of the overlaid macro cell 401A. This is sometimes known as "shared cell" or "soft cell". In this case at least the CRS, PBCH, PSS and SSS are transmitted from the macro node 401A. The PDSCH may be transmitted from the pico node 401 B. To allow for demodulation and detection of the PDSCH, despite the fact that no CRS is transmitted from the pico node 401 B, DM-RS should be transmitted from the pico node 401 B together with the PDSCH. The user equipment-specific reference signals may then be used by the terminal for PDSCH demodulation/detection. This is shown in Figure 10.

Transmitting data from a pico node 401 B not transmitting CRS as described above requires DM-RS support in the terminal ("non-legacy terminal"). In LTE, DM-RS-based PDSCH reception is supported in Rel-10 and for FDD while for the L1/L2 control signaling, DM-RS-based reception is planned for Rel-11. For terminals not supporting DM-RS-based reception ("legacy terminals") one possibility in a shared cell setting is to exploit SFN²-type of transmission. In essence identical copies of the signals and channels necessary for a legacy terminal are transmitted simultaneously from the macro 401A and pico 401B nodes. From a terminal perspective this will look as a single transmission. Such an operation, which is illustrated in **Figure 11****,** will only provide an SINR gain. This may be translated into a higher data rate, but not a capacity improvement, as transmission resources cannot be reused across sites within the same cell.

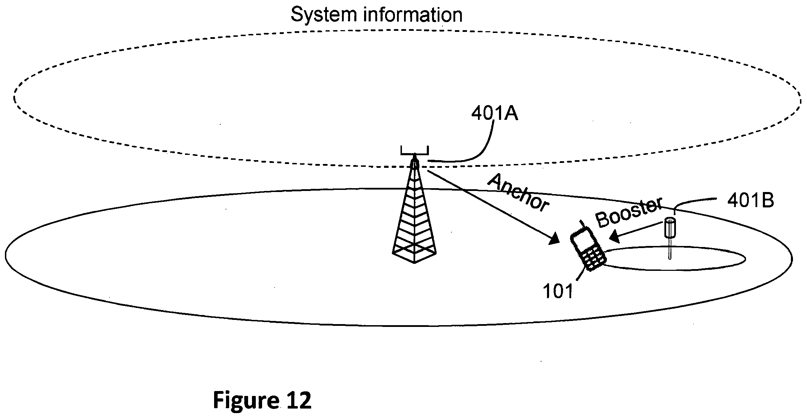

It may be assumed that the macros 401A are able to provide coverage and the picos 401 B are there only for capacity enhancements (i.e., no coverage holes), another alternative architecture is where the user equipment maintains the macro connectivity all the time (called the "anchor" flow), and adds the pico connectivity when it is in the coverage area of the pico (called the "booster" flow). When both connections are active, the anchor flow may be used either for control signaling while the booster flow is used for data. However, it will still be possible to send data also via the anchor flow. We define this case as "multiple connectivity" or "dual connectivity". This is illustrated in Figure 12. Note that in this case, as in the previous cases, the system information is shown to be sent only from the macro 401A, but it is still possible to send it also from the picos 401 B.

### Handover

Handover is one of the important aspects of any mobile communication system, where the system provides service continuity of the user equipment by transferring the connection from one cell to another depending on several factors such as signal strength, load conditions, service requirements, etc. The provision of efficient/effective handovers (minimum number of unnecessary handovers, minimum number of handover failures, minimum handover delay, etc.), would affect not only the Quality of Service (QoS) of the end user but also the overall mobile network capacity and performance.

In LTE, UE-assisted, network controlled handover is utilized (3GPP TS 36.300). The handover is based on user equipment reports, and the user equipment 101 is moved, if required and possible, to the most appropriate cell that will assure service continuity and quality.

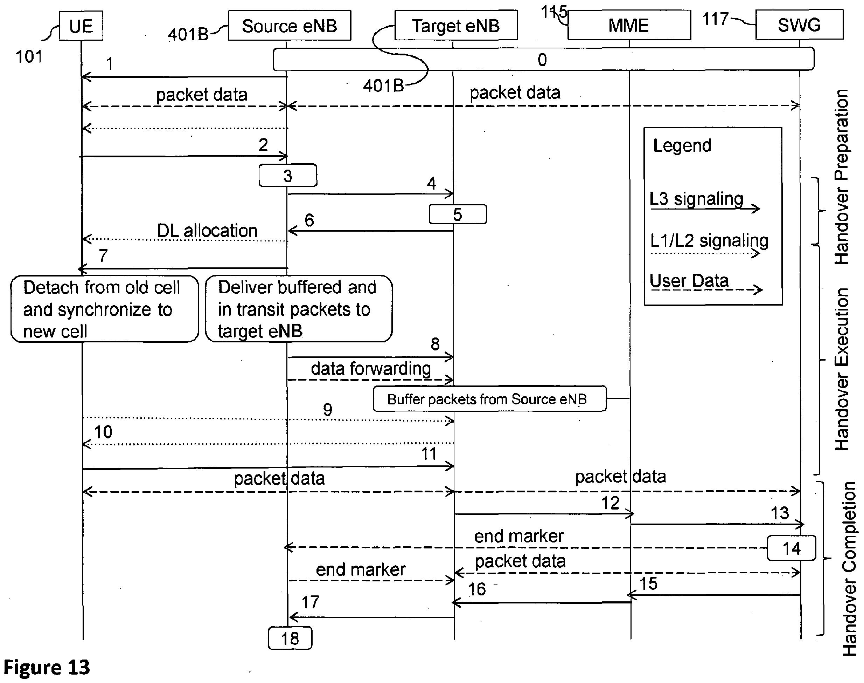

Handover is performed via the X2 connection, whenever available, and if not, using S1 (i.e., involving the Core Network (CN)). The X2 Handover process is shown in Figure 13. The handover procedure can be sub-divided into three stages of preparation (initiation), execution and completion.

The main steps of the handover process are:
Action 1: The source eNB 401S configures the user equipment measurement procedures. This can be done either when the user equipment 101 first connects to an eNB 401A (comprised in the HO command as described later) or later by sending measurement reconfigurations. The measurement configurations are sent to the user equipment 101 by using the *measConfig* Information Element (IE) that is comprised in the *RRCConnectionReconfiguration.* message.
Action 2: The user equipment 101 is triggered to send a measurement report by the measurement rules set as described in the previous section
Action 3: Based on the received measurement report and other RRM information, the source eNB 401S makes a decision to hand over the user equipment 101 to the target 401 T.
Action 4: The source eNB 401S issues a HANDOVER REQUEST message to the target eNB 401T passing necessary information to prepare the HO at the target side. The source eNB 401A must indicate the cause of the HO in this message, which may be, for example,
   a. Handover Desirable for Radio Reasons,
   b. Resource Optimization Handover,
   c. Reduce Load in Serving Cell
Action 5: Admission Control may be performed by the target eNB 401T.
Action 6: The target eNB 401T prepares HO with L1/L2 and sends the HANDOVER REQUEST ACKNOWLEDGE to the source eNB. The HANDOVER REQUEST ACKNOWLEDGE message comprises an Information Element (IE) called "Target eNB to Source eNB Transparent Container". This IE basically comprises the handover command message (*RRCConnectionReconfiguration* that comprises the *mobilityControllnfo* IE) that is sent to the user equipment 101 in the next step. It should be appreciated that as soon as the source eNB 401S receives the HANDOVER REQUEST ACKNOWLEDGE, or as soon as the transmission of the handover command is initiated in the downlink, user plane data forwarding may be initiated.
Action 7: The source eNB 401S sends the handover command (i.e., *RRCConnectionReconfiguration* message comprising the *mobilityControllnfo*) towards the user equipment 101 on behalf of the target eNB 401T.
Action 8: The source eNB 401S sends the SN (Sequence Number) STATUS TRANSFER message to the target eNB 401T, which comprises the ID of the impacted E-RABs and PDCP SNs for UL and DL data transfer.
Action 9: After receiving the *RRCConnectionReconfiguration* message comprising the *mobilityControllnfo,* user equipment 101 performs synchronisation to target eNB 401T and accesses the target cell via RACH. If the received *RRCConnectionReconfiguration* comprised dedicated RACH information, the dedicated preamble comprised in there is used for the RACH access. Otherwise, a contention based approach is taken. The user equipment 101 also configures the lower layer protocol stacks based on the received configuration information.
Action 10: The target eNB 401T responds with UL allocation and timing advance.
Action 11: When the user equipment 101 has successfully accessed the target cell, the user equipment 101 sends the *RRCConnectionReconfigurationComplete* message to the target to confirm that the handover succeeded. Optionally, the user equipment 101 may indicate to the target if it has information regarding earlier Radio Link Failure (RLF) or other logged measurements that could be used for optimization purposes. After the confirmation is received, the target eNB 401T can begin sending data to the user equipment 101 and the user equipment 101 can send data to the target based on the scheduling grants it is receiving. However, the data from the CN is still routed to the source eNB.
Action 12: The target eNB 401T sends a PATH SWITCH REQUEST message to MME 115 to inform that the user equipment 101 has changed the cell. Table 1 shows the contents of the PATH SWITCH REQUEST message. If not all the user equipment bearers are comprised in the E-RAB To Be Switched in Downlink List, the MME 115 considers the non-comprised E-RABs as implicitly released by the eNB (TS 36.413). That is, normal operation will be for the target eNB 401T to list only those bearers that it has admitted during admission control and that it has communicated earlier to the source via the HANDOVER REQUEST ACKNOWLEDGE message. The MME 115 releases the non-accepted dedicated bearers by triggering bearer release procedures (3GPP TS 23.401).
Action 13: The MME 115 sends a MODIFY BEARER REQUEST message to the Serving Gateway 117. The MME 115 comprises the bearers to be switched to the new target in the "Bearer contexts to be modified" field and the ones not received in the PATH SWITCH REQUEST message in the "Bearer context to be removed" field of the MODIFY BEARER REQUEST message (3GPP TS 29.274).
Action 14: The Serving Gateway 117 switches the downlink data path to the target side. That is, it starts sending downlink packets to the target eNodeB 401T using the newly received address and TEIDs (3GPP TS 23.401). The Serving gateway 117 sends one or more "end marker" packets on the old path to the source eNB 401S and then can release any U-plane/TNL resources towards the source eNB 401S.
Action 15: The Serving Gateway 117 sends a MODIFY BEARER RESPONSE message to MME 115.
Action 16: The MME 115 confirms the PATH SWITCH REQUEST message with the PATH SWITCH REQUEST ACKNOWLEDGE message. Table 2 shows the contents of this message.
Action 17: By sending the UE CONTEXT RELEASE message, the target eNB 401T informs success of HO to source eNB 401S and triggers the release of resources by the source eNB 401S.
Action 18: Upon reception of the UE CONTEXT RELEASE message, the source eNB 401S may release radio and C-plane related resources associated to the user equipment context. Any on-going data forwarding may continue.

**Table 1: PATH SWITCH REQUEST message.**

| **IE/Group Name** | **Presence** | **Range** | **IE type and reference** | **Semantics description** | **Criticalit y** | **Assigne d Criticalit y** |
|---|---|---|---|---|---|---|
| Message Type | M | | 9.2.1.1 | | YES | reject |
| eNB UE S1AP ID | M | | 9.2.3.4 | | YES | reject |
| **E-RAB To Be Switched in Downlink List** | | *1* | | | YES | reject |
| **>E-RABs Switched in Downlink Item IEs** | | *1 to <maxnoo f E-RABs>* | | | EACH | reject |
| >>E-RAB ID | M | | 9.2.1.2 | | - | |
| >>Transpo rt layer address | M | | 9.2.2.1 | | - | |
| >>GTP-TEID | M | | 9.2.2.2 | To deliver DL PDUs | - | |
| Source MME UE S1AP ID | M | | 9.2.3.3 | | YES | reject |
| E-UTRAN CGI | M | | 9.2.1.38 | | YES | ignore |
| TAI | M | | 9.2.3.16 | | YES | ignore |
| UE Security Capabilities | M | | 9.2.1.40 | | YES | ignore |
| CSG Id | O | | 9.2.1.62 | | YES | ignore |
| Cell Access Mode | O | | 9.2.1.74 | | YES | ignore |
| Source MME GUMMEI | O | | 9.2.3.9 | | YES | ignore |

**Table 2: PATH SWITCH REQUEST ACKNOWLEGE message.**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.1.1 | | YES | reject |
| MME UE S1AP ID | M | | 9.2.3.3 | | YES | ignore |
| eNB UE S1AP ID | M | | 9.2.3.4 | | YES | ignore |
| UE Aggregate Maximum Bit Rate | O | | 9.2.1.20 | | YES | ignore |
| **E-RAB To Be Switched in Uplink List** | | *0..1* | | | YES | ignore |
| **>E-RABs Switched in Uplink Item IEs** | | *1 to <maxn oof E-RABs>* | | | EACH | ignore |
| >>E-RAB ID | M | | 9.2.1.2 | | - | |
| >>Trans port Layer Address | M | | 9.2.2.1 | | - | |
| >>GTP-TEID | M | | 9.2.2.2 | | - | |
| E-RAB To Be Released List | O | | E-RAB List 9.2.1.36 | a value for *E-RAB ID* shall only be present once in *E-RAB To Be Switched in Uplink List* IE + *E-RAB to Be Released List* IE | YES | ignore |
| Security Context | M | | 9.2.1.26 | One pair of {NCC, NH} is provided | YES | reject |
| Criticality Diagnostics | O | | 9.2.1.21 | | YES | ignore |
| MME UE S1AP.ID 2 | O | | 9.2.3.3 | This IE indicates the MME UE S1AP ID assigned by the MME | YES | ignore |

Current specifications do not allow the setup of bearers in multiple eNBs 401 for the same user equipment 101, which may be useful for enabling multiple connectivity. This would allow an optimal distribution of bearers depending on their QoS and UL/DL requirements. One of the problems with multiple connectivity is how to map the user plane bearers on the anchor flow and booster flow, respectively. The simple solution is that each bearer is mapped on a single flow, for example, the first bearer uses the anchor flow and the second bearer uses the booster flow.

The problem with this simple solution is that in order to keep the user data throughput on acceptable levels the user plane bearer may need to be "handed over" frequently from the booster flow to the anchor flow or vice versa, depending on radio conditions and the speed of the mobile terminal 101.

An alternative solution is to aggregate the anchor and booster flows for a given bearer and thus map the bearer on multiple flows simultaneously. One example of this that is already known is to perform this mapping in the PDCP layer. As the PDCP layer in the LTE system is terminated in the eNB, it is typically the macro eNB that terminates the PDCP layer for a given radio bearer and then maps the data on RLC entities in the anchor and the booster.

A drawback with this solution is that all data has to transit the macro eNB, and worse, the link between macro eNB and pico eNB. Depending on the deployment this link may have very limited bandwidth and thus it may be hard to utilize the capacity of the booster flow since the link between the macro and pico eNB will be the bottleneck.

### Overview of the example embodiments

### General introduction to the example embodiments

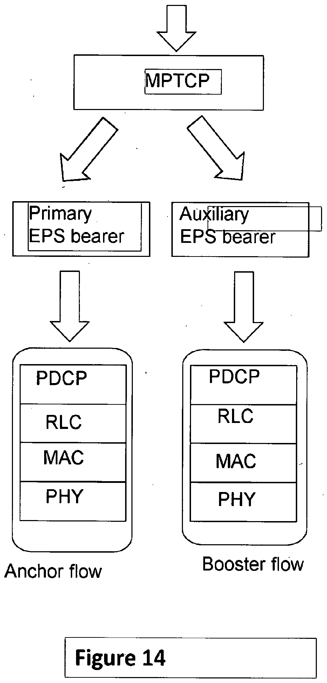

In Figure 14 the user plane architecture, which is the basis for the example embodiments, is illustrated. User plane aggregation (i.e., the possibility to split the packets belonging to one user data session over the anchor and booster flows) is realized by using a higher layer aggregation protocol like multi-path TCP (MPTCP). MPTCP maps the packets of the user data session onto the Primary and Auxiliary bearers, which in turn are mapped onto the Anchor and Booster flows, respectively.

Accordingly, example embodiments presented herein provide an improved means of multiple connectivity. According to some of the example embodiments, a method is provided to trigger and establish multiple bearers, named the "primary bearer" (e.g., one) and the "auxiliary bearer" (e.g., one or more), for a user data session (e.g., TCP/IP connection). Initially, those bearers use either the same eNB, typically the Anchor eNB, or, as alternative, they use different eNBs. For example, the primary bearer uses the Anchor eNB 401A and the auxiliary bearer uses the Booster eNB 401 B.

The auxiliary bearer is then transferred to a different eNB (e.g., the booster eNB), triggered by certain events and by methods presented in the example embodiments. At this stage the packets of the user data session still flows through the Anchor eN B. It should be appreciated that this step is not needed if the auxiliary bearer is using a different eNB (e.g. the booster eNB).

The mapping of the user data session onto the "primary bearer" and "auxiliary bearer" may be performed at a central point in the network where all user data anyway traverses, for example, the PGW 119. Switching of user data packets between the primary and auxiliary bearers may be introduced by mapping of a given packet onto one of the associated bearers (primary or auxiliary). The example embodiments describe means to use both a primary and an auxiliary bearer, where the latter may be associated to a node that act as a capacity enhancing eNB, possibly denoted booster eNB.

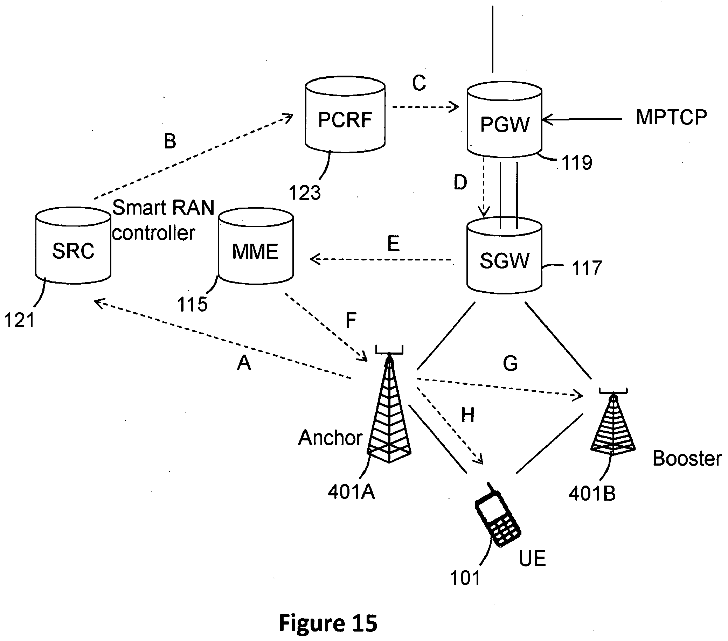

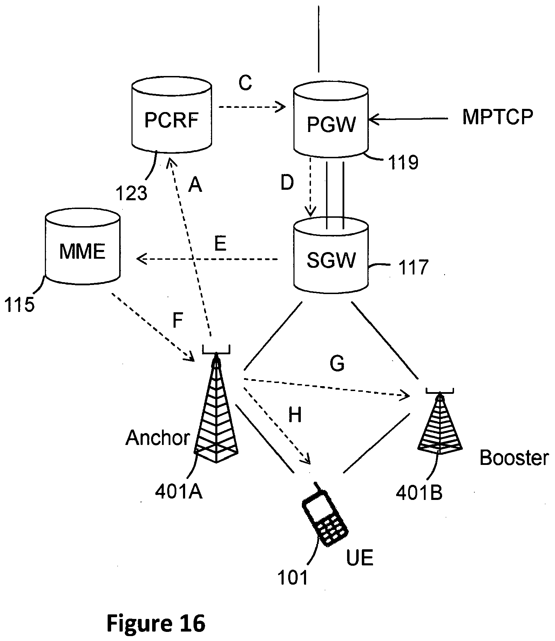

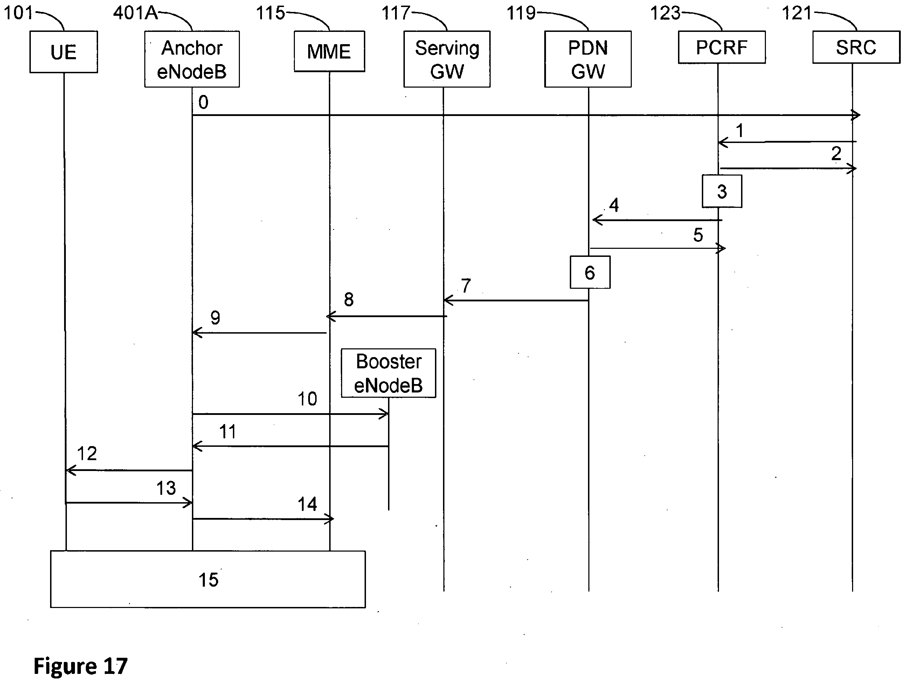

The general principles of some the example embodiments presented herein are illustrated in Figure 15 and Figure 16. Figure 17 illustrates a messaging diagram of the example scenario illustrated in Figure 15.

First, the anchor eNB 401A may identify the need to establish booster connectivity for a user equipment, or a wireless terminal in general, 101. According to some of the example embodiments, the identification may be provided via a message received from another node in the network, for example, the wireless terminal 101, a radio controller 121 or a mobility management node 115. It should be appreciated that in the example provided herein the mobility management node is a MME, however, the example embodiments may also be applied to systems employing a SGSN or S4-SGSN as a mobility management node. According to some of the example embodiments, the identification may also be provided by, for example, wireless terminal measurements, a type of service used by a pre-existing bearer (which may be the primary bearer), a location of a wireless terminal 101 associated with the pre-existing bearer, a mobility history of the wireless terminal 101 associated with the pre-existing bearer, and/or a hysteresis load analysis of base stations.

Once the anchor eNB 401A has identified the need for establishing booster connectivity of the user equipment 101, the anchor eNB 401A may send a request. According to the example embodiments illustrated in Figures 15 and 17, the anchor eNB 401A may send the request to a SRC 121 for establishing an auxiliary bearer for a pre-existing primary bearer (Figure 15, message A; Figure 17, message 0). Thereafter, the SRC 121 may send a message to the PCRF 123 in order to obtain resources for the auxiliary bearer (Figure 15, message B). According to some of the example embodiments, the message sent from the SRC 121 to the PCRF 123 is an AA-Request message (Figure 17, message 1). In response, the PCRF 123 may send an AA-Answer message to the SRC 121 (Figure 17, message 2). It should also be appreciated that according to some of the example embodiments, the eNB 401A sends the request for booster connectivity or the auxiliary bearer directed to the PCRF 123, as illustrated in Figure 16 (message A).

Thereafter, the PCRF 123 creates new PCC rules to be provided to the PGW 119 (Figures 15 and 16, message C; Figure 17, action 3). According to some of the example embodiments, this information may be provided to the PGW 119 via a Re-Authentication Request (RAR) (Figure 17, message 4). The PCC rules may be comprised in the Charging-Rule-Definition AVP of the Charing-Rule-Install AVP (comprising among other things the TFTs). The PGW 119 may confirm the reception of the new PCC rules by sending a Re-Authentication Answer (RAA) (Figure 17, message 5). At this point, the PGW 119 may also takes a decision on whether or not the auxiliary bearer should be established (Figure 17, action 6).

The PGW 119 then creates a dedicated (e.g., auxiliary) bearer in the SGW 117 by sending a Create Bearer Request to the SGW 117 for the auxiliary bearer (Figures 15 and 16, message D; Figure 17, message 7). The message indicates the bearer QoS requested (QCI, ARP, MBR, and GBR), the Traffic Flow Templates (TFTs), and the TEID and IP address for the UL (PGW) of the user plane. The Linked Bearer Identity (LBI) is used to identify the session. It should be appreciated that for non-GBR bearers the MBR and GBR parameters are set to zero.

The SGW 117 creates the dedicated (e.g., auxiliary) bearer in the MME 115 by sending the Create Bearer Request message to the MME 115 (Figures 15 and 16, message E; Figure 17, message 8). The Create Bearer Request message indicates the bearer QoS and the Traffic Flow Templates (TFTs) as received from the PGW 119 and the TEID and IP address for the UL (SGW) of the user plane. The LBI is used to identify the session. It should be appreciated that if the MME 115 has a procedure to execute towards the SGW 117 before an on-going session or bearer establishment is completed, for example, a bearer modification as part of an Attach (or an Attach for mobility from eHRPD), the MME 115 may ignore the Create Bearer Request. This will cause the SGW 117 to repeat the Create Bearer Request and once this happens the Dedicated Bearer Activation will proceed.

The MME 115 thereafter sends a request to the eNB 401A to establish an E-RAB, and a radio bearer, to support the dedicated (e.g., auxiliary) bearer by sending the E-RAB Setup Request message to the eNB 401A (Figures 15 and 16, message F; Figure 17, message 9). The request message indicates the EPS bearer QoS requested (QCI, ARP, and if the bearer is a GBR-bearer, also the MBR and GBR) and the TEID and IP Address for the UL (SGW) of the user plane. If the E-RAB establishment results in a new UE-AMBR, the UE-AMBR is provided to the eNodeB 401A. The MME 115 also provides the NAS message Activate Dedicated EPS Bearer Context Request (comprising among other things the Traffic Flow Templates (TFTs)) to be sent to the user equipment, or wireless device in general, 101.

Thereafter, the anchor eNB 401A requests the booster eNB 401 B to establish an auxiliary E-RAB, and a radio bearer, to support the dedicated bearer by sending, for example, an Auxiliary E-RAB Setup Request message to the booster eNB 401 B (Figures 15 and 16, message G, Figure 17, message 10). The request message indicates the EPS bearer QoS requested (QCI, ARP, and if the bearer is a GBR-bearer, also the MBR and GBR) and the TEID and IP address for the UL (SGW) of the user plane. If the Auxiliary E-RAB establishment results in a new UE-AMBR, the UE-AMBR is provided to the booster eNodeB 401 B. The anchor eNodeB 401A also provides the NAS message Activate Dedicated EPS Bearer Context Request to be sent to the user equipment, or wireless terminal in general, 101.

The booster eNB 401 B responds to the anchor eNB 401A by confirming the resource allocation for the Auxiliary E-RAB, and its radio bearer, with an Auxiliary E-RAB Setup Response message (Figure 17, message 11). This message comprises the allocated radio resources (e.g., auxiliary radio bearer information) as well as the TEID and IP address for the DL (booster eNB) of the user plane.

The anchor eNB 401A thereafter establishes the radio bearer needed to support the auxiliary E-RAB (based on the auxiliary radio bearer information). The NAS message Activate Dedicated EPS Bearer Context Request received in message 9 of Figure 17 is transferred to the user equipment in a RRC message establishing the radio bearer (RRC Connection Reconfiguration) (Figures 15 and 16, message H; Figure 17, messages 12 and 13). It should be appreciated that once the radio bearer needed to support the auxiliary EPS bearer is created in the user equipment; it will start to apply the received Traffic Flow Templates (TFTs).

After successfully establishing the radio bearer needed to support the auxiliary E-RAB, the eNodeB responds to the MME 115 with the E-RAB Setup Response message (Figure 17, message 14). This message comprises the TEID and IP Address for the DL (eNB) of the user plane. After successfully establishing the radio bearer and the EPS bearer context, the NAS message "Activate Dedicated EPS Bearer Context Accept" is transferred from the user equipment (or wireless terminal in general) 101, using the Uplink NAS Signalling Transfer procedure (Figure 17, message 15). It should be appreciated that the MME 115 will wait for "Activate Dedicated EPS Bearer Context Accept" message before proceeding.

Thereafter, the MME 115 acknowledges the creating of the dedicated bearer in the MME 115 by sending the Create Bearer Response message to the SGW 117 (Figure 17, message 16). The message indicates the TEID and IP address for the DL (eNB) of the user plane. The SGW 117 acknowledges the creation of the dedicated bearer in the SGW 117 by sending the Create Bearer Response message to the PGW 119 (Figure 17, message 17). The message indicates the TEID and IP address for the DL (SGW) of the user plane. It should be appreciated that once the establishment of the auxiliary EPS bearer (e.g., by means of a dedicated bearer) has been established, the PGW 119 will start to apply the Traffic Flow Templates (TFTs) received from the PCRF 123.

It should be appreciated that the function of the PCRF 123 is to turn requests for resources for a certain application into policies (e.g., rules) for charging and QoS. To be able to create rules that result in separation of different Multi-path TCP flows on different bearers may require additions to the Rx interface (e.g., Figure 17, message 1; Figure 15, message B), the Gx interface (e.g., Figure 17, message 4; Figures 15 and 16, message C). Furthermore, there may be new features in the PGW 119 (e.g., to some extent matching message 6 of Figure 17).

Further details of the example embodiments are described below according to the corresponding sub-heading. It should be appreciated that the example embodiments are described with the use of an LTE based system as an example, however, the example embodiments may be applied to any communications system. Furthermore, the example embodiments are described where the anchor base station or user equipment initiates the establishment of the auxiliary bearer. It should be appreciated that the example embodiments may also be applied to the booster base station initiating the establishment of the auxiliary bearer.

### Auxiliary bearer establishment triggering

As described above, prior to the eNB 401A sending a request message (e.g., message A of Figures 15 and 16), the eNB first identifies the need to create an auxiliary bearer. According to some of the example embodiments, this identification may be provided via a trigger. According to some of the example embodiments, the establishment of an auxiliary bearer may be triggered by the establishment of the primary bearer, which means that the auxiliary bearer is always established at the same time as the primary bearer.

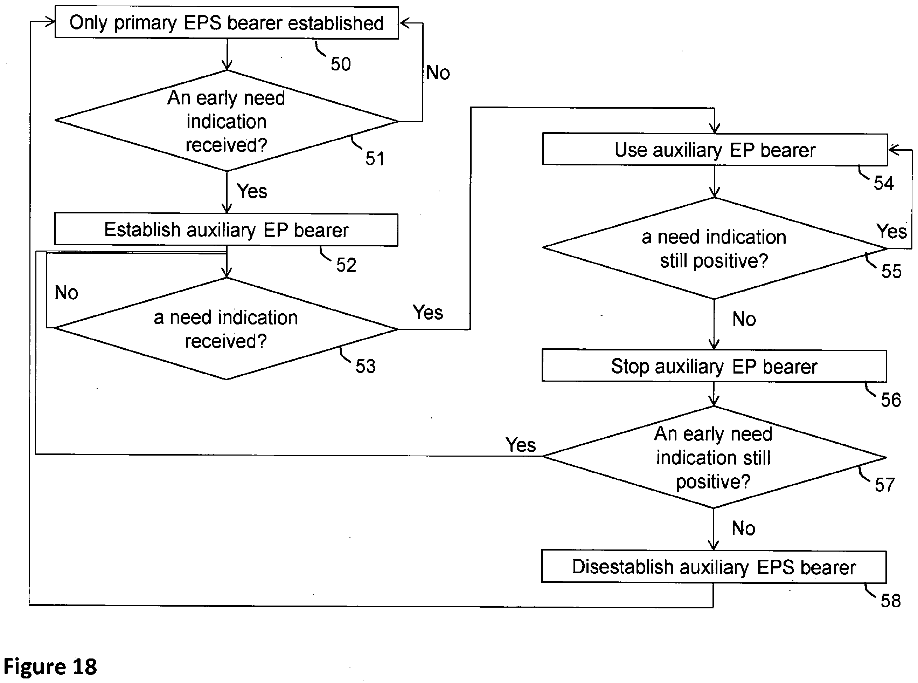

According to some of the example embodiments, the trigger may be in the form of a need based indication. According to some of the example embodiments, the trigger may also be in the form of an early indication that there is a need for the auxiliary bearer, meaning that a separate second need indication trigger is configured, which is less conservative than the first need indication trigger that is used for the actual data assignment to bearers. Similarly, there may be triggers to disestablish the auxiliary bearer, which are analogous to the establishment triggers. Figure 18 provides a comprehensive flow chart with respect to triggers. It should be appreciated that if the early need indication and need indication are the same, some of the steps in the flow chart are not needed, and may be omitted.

According to the example provided in Figure 18, first, a primary bearer may be established (step 50). Thereafter, an evaluation of whether or not an early need indication was received is made (step 51). The early need indication may, for example, be provided by the user equipment 101 and/or may be subscription based. If an early need indication has not been received, the evaluation returns to step 50. If the early need indication has been received, an auxiliary bearer is established, according to any of the example embodiments discussed herein (step 52).

Thereafter, a second evaluation is made as to whether a need indication has been received (step 53). If the need indication has not been received, the evaluation remains at step 53. If the need indication has been received, the auxiliary bearer which was established in step 52 is put to use (step 54). Periodically, an evaluation may be made as to whether or not the need indication is still positive (step 55). If the need indication is still positive, the auxiliary bearer will continue to be used (step 54). If the need indication is negative, the use of the auxiliary bearer will be stopped (step 56).

Once the auxiliary bearer is no longer in use, a periodic evaluation of whether or not the early need indication is still positive may also be made (step 57). If the early need indication is positive, the evaluation may return to step 53. If the early need indication is negative, the auxiliary bearer may be disestablished (step 58).

It should be appreciated that the need indication may be triggered in numerous different ways. An example method of triggering the need based indication is based on the service used by the wireless terminal, for example as described by a quality of service class indicator. A further example method of triggering the need based indication is based on the service used by the wireless terminal as disclosed by inspecting the packet types of the flow, often referred to as deep packet inspection.

Another example method of triggering the need based indication is based on information indicating that the wireless terminal 101 is in the proximity of the booster node 401 B or base station. An example of a proximity indication is measurements associated to the terminal 101, that can be considered close to other measurements associated to the same or different terminals in the past that have been disclosed as in the proximity of the booster 401 B. A further example of a proximity indication is measurements which may be obtained by the wireless terminal 101, the serving anchor eNB 401A, the booster eNB 401 B or two or more of the aforementioned.

The need indication may further be triggered based on one or more of the last visited cells of the wireless terminal 101. The set of last visited cells follows the wireless terminal 101 during mobility from one serving node to another as part of the UE History Information. One example is when being served by an anchor cell, and there are reasons to establish a radio link to a booster cell since it is concluded to be favourable, then the auxiliary bearer may be established with the booster 401 B, rather than a primary bearer replacing the existing primary bearer with the anchor 401 A.

The need indication triggering may also be based on the load of the anchor and booster cells, for example the load over the radio interface (e.g., the current load in relation to the max load), the hardware load (e.g., the current hardware in use compared to the available hardware), the transport network load (e.g., the current transport in terms of the data rate or latency, possibly compared to the available data rate or latency).

The need indication trigger may also be based on one or more of the aforementioned comprising a hysteresis mechanism enabling triggering regions that overlap. One example is that the use of the bearer starts when the load exceeds L+H, and stops when the load precedes L-H, where L is the load threshold and H the hysteresis. The need indication may further be triggered based on any of the aforementioned triggers in combination.

### Associating the pre-existing bearer with the auxiliary bearer

It should be appreciated that once the eNB receives the request associated with the auxiliary bearer (e.g., message F of Figures 15 and 16), the eNB may need to associate the auxiliary bearer with the primary bearer. In order to associate the bearers, the eNB shall first determine that the incoming request for bearer establishment (e.g., message F of Figures 15 and 16) is for an auxiliary bearer. According to some of the example embodiments, this determination may be implicitly or explicitly performed.

With respect to implicit determination, since each auxiliary bearer establishment is triggered from the eNodeB 401A/401B (e.g., by signaling towards the SRC or PCRF) the eNodeB may associate the auxiliary bearer with the primary bearer by assuming that the next bearer being established is the auxiliary. The drawback of this method is that there may be other events triggering bearer establishment more or less at the same time. This leads to a new primary bearer being assumed to be an auxiliary bearer (and the real auxiliary bearer that is established later as a need primary bearer).

With respect to explicit determination, the eNB 401A/401 B makes use of explicit knowledge to associate the auxiliary bearer with the primary bearer. According to some of the example embodiments, the eNodeB provides a "token" (e.g., an information element) to the SRC or PCRF within the initial request message (e.g., message A of Figures 15 and 16). This "token" is forwarded in the signaling chain eNB→SRC →PCRF or eNB→ PCRF (resource request), PCRF → PGW (QoS (and charging) policy provisioning), and PGW → SGW → MME →eNB (bearer establishment). Thereby, the eNB 401A/401B may uniquely identify the auxiliary bearer with the request sent to the SRC 121 or PCRF 123. It should also be appreciated that information on the associated (or primary) bearer may be provided, for example, by the PGW. Such information may comprise a reference to the bearer ID of the primary bearer, which may be based on information provided by the PCRF. Such information may be comprised in signaling messages from the PGW to the SGW, MME and the eNodeB.

According to some of the example embodiments, the eNodeB 401A/401B uses the QCI value associated with the auxiliary bearer establishment to determine that the bearer in fact is an auxiliary EPS bearer. The QCI evaluation may be done by providing the QCI to be used to the SRC 121 that will provide it further on to the PCRF 123. Alternatively, the eNB 401A/401 B may provide the QCI to the PCRF 123 directly, as illustrated in the example provided by Figure 16. The PCRF 123 then uses the QCI in the normal policy provisioning.

According to some of the example embodiments, the QCI evaluation may be provided the by eNodeB 401A/401B and the PCRF 123 being configured to associate the QCI of a primary bearer with a unique QCI value for the auxiliary bearer, for example, if the primary bearer has QCI 9 the auxiliary bearer could have QCI 109.

It should be appreciated that the PGW 119 receives the request for bearer establishment from the PCRF 123 (e.g., message C, Figures 15 and 16), the PGW 119 will associate the auxiliary bearer with a pre-existing primary bearer. The PGW 119 uses such an association to determine the multi-path TCP or any other technology that distributes user data packets on the two bearers (e.g., primary and auxiliary).

According to some of the example embodiments, the PGW 119 may identify that two bearers (e.g., the primary and auxiliary bearer) have identical QoS settings, and thereby are intended for the same traffic and should be associated. According to some of the example embodiments, the PGW 119 may identify that the two bearers (e.g., primary and auxiliary bearers) have identical TFTs, and thereby are intended for the same traffic and should be associated. According to some of the example embodiments, the PGW 119 may be configured in a similar manner as was described in relation to the eNB 401A/401 B and PCRF 123. Specifically, the PGW 119 may be configured to associate a QCI of the primary bearer with a unique QCI value for the auxiliary bearer. For example, if the primary bearer has a QCI of 9, the auxiliary bearer may have a QCI of 109.

It should further be appreciated that the user equipment, or more generally the wireless terminal, 101 also performs an association of the primary and auxiliary bearer when receiving communications from the eNB 401A/401B (e.g., message H of Figures 15 and 16). The wireless terminal 101 may use such an association to determine multi-path TCP, or any other technology used to distribute data packets on the two bearers (e.g., primary and auxiliary).

According to some of the example embodiments, the user equipment 101 may be configured to identify that two bearers (e.g., primary and auxiliary) have identical QoS settings, and thereby are intended for the same traffic and should be associated. According to some of the example embodiments, the wireless terminal 101 may identify that the two bearers (e.g., primary and auxiliary) have identical TFTs, and thereby are intended for the same traffic and should be associated. According to some of the example embodiments, the wireless terminal 101 is provided with the association explicitly by the eNB 401A/401B when establishing the auxiliary bearer.

### Example node configuration

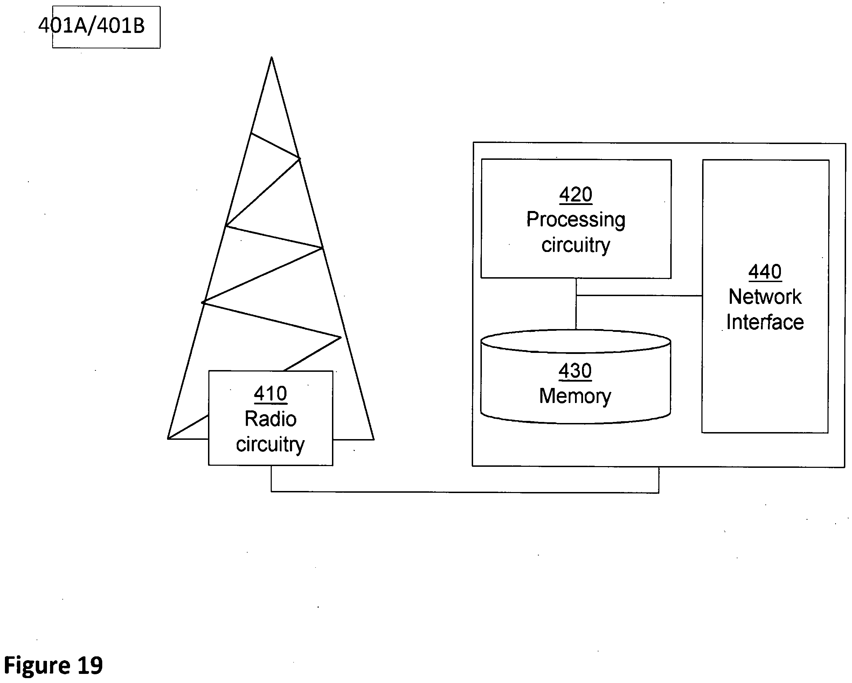

**Figure 19** illustrates an example node configuration of a base station or eNB 401A/401 B which may perform some of the example embodiments described herein. It should be appreciated that the base station illustrated in Figure 19 may be an anchor or booster eNB. The base station 401A/401B may comprise radio circuitry or a communication port 410 that may be configured to receive and/or transmit communication data, instructions, and/or messages. It should be appreciated that the radio circuitry or communication port 410 may be comprised as any number of transceiving, receiving, and/or transmitting units or circuitry. It should further be appreciated that the radio circuitry or communication 410 may be in the form of any input or output communications port known in the art. The radio circuitry or communication 410 may comprise RF circuitry and baseband processing circuitry (not shown).

The base station 401A/401B may also comprise a processing unit or circuitry 420 which may be configured to provide or assist in providing the establishment of an auxiliary bearer. The processing circuitry 420 may be any suitable type of computation unit, for example, a microprocessor, digital signal processor (DSP), field programmable gate array (FPGA), or application specific integrated circuit (ASIC), or any other form of circuitry. The base station 401A/401B may further comprise a memory unit or circuitry 430 which may be any suitable type of computer readable memory and may be of volatile and/or non-volatile type. The memory 430 may be configured to store received, transmitted, and/or measured data, device parameters, communication priorities, and/or executable program instructions.

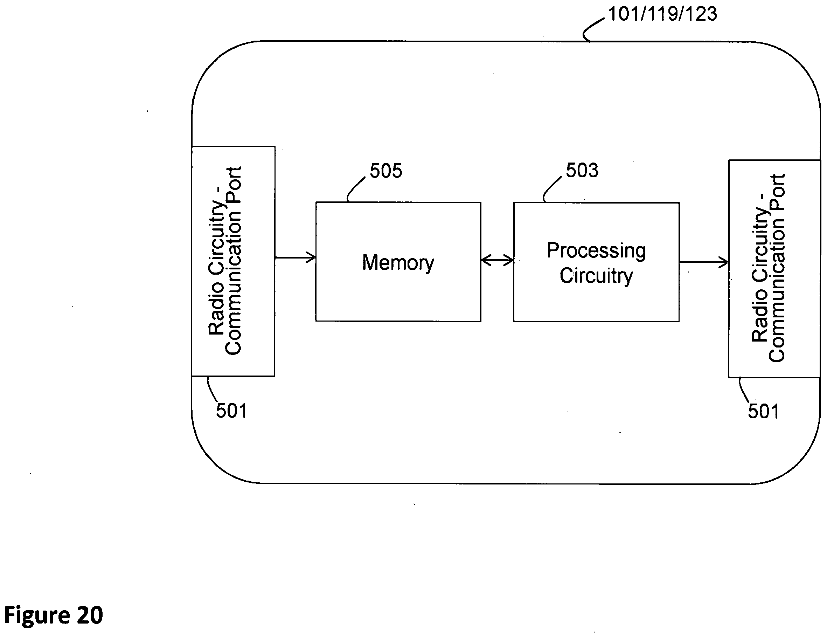

**Figure 20** illustrates an example node configuration of a communications node 101/119/123 which may perform some of the example embodiments described herein. It should be appreciated that the communications node may be a PGW 119, a PCRF 123 or a wireless terminal (e.g., a user equipment) 101. The PGW 119, PCRF 123 or wireless terminal 101 may comprise radio circuitry or a communication port 501 that may be configured to receive and/or transmit communication data, instructions, and/or messages. It should be appreciated that the radio circuitry or communication port 501 may be comprised as any number of transceiving, receiving, and/or transmitting units or circuitry. It should further be appreciated that the radio circuitry or communication 501 may be in the form of any input or output communications port known in the art. The radio circuitry or communication 501 may comprise RF circuitry and baseband processing circuitry (not shown).

The PGW 119, PCRF 123 or wireless terminal 101 may also comprise a processing unit or circuitry 503 which may be configured to provide or assist in providing the establishment of an auxiliary bearer. The processing circuitry 503 may be any suitable type of computation unit, for example, a microprocessor, digital signal processor (DSP), field programmable gate array (FPGA), or application specific integrated circuit (ASIC), or any other form of circuitry. The PGW 119, PCRF 123 or wireless terminal 101 may further comprise a memory unit or circuitry 505 which may be any suitable type of computer readable memory and may be of volatile and/or non-volatile type. The memory 505 may be configured to store received, transmitted, and/or measured data, device parameters, communication priorities, and/or executable program instructions.

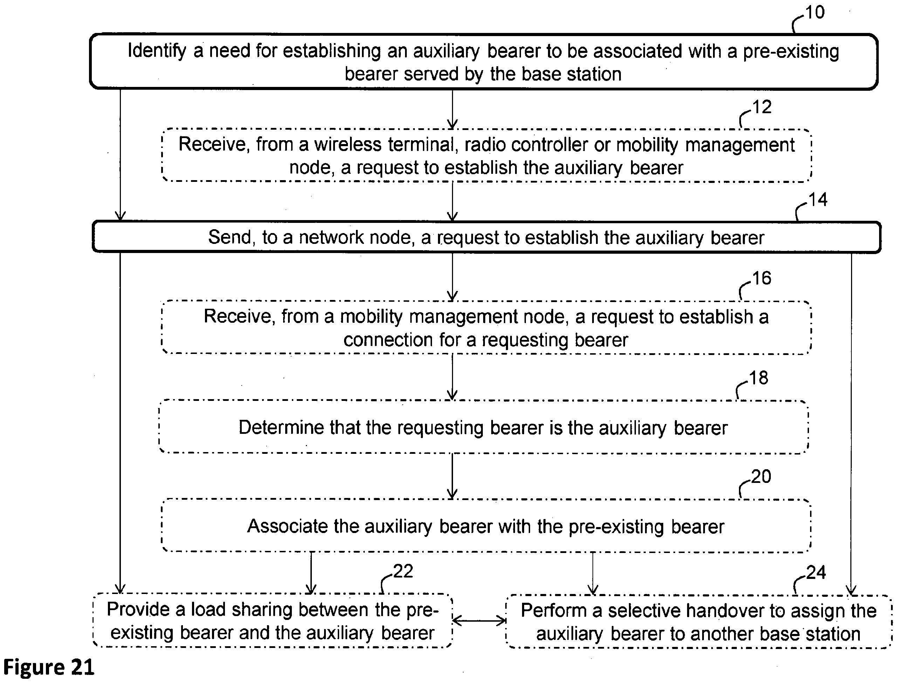

**Figure 21** is a flow diagram depicting example operations which may be taken by the base station 401A/401 B as described herein for providing of assisting or in providing the establishment of an auxiliary bearer. It should also be appreciated that Figure 21 comprises some operations which are illustrated with a solid border and some operations which are illustrated with a dashed border. The operations which are comprised in a solid border are operations which are comprised in the broadest example embodiment. The operations which are comprised in a dashed border are example embodiments which may be comprised in, or a part of, or are further operations which may be taken in addition to the operations of the boarder example embodiments. It should be appreciated that these operations need not be performed in order. Furthermore, it should be appreciated that not all of the operations need to be performed. The example operations may be performed in any order and in any combination. It should also be appreciated that the actions may be performed by an anchor or booster base station.

### Operation 10:

The base station 401A/401B is configured to identify 10 a need for establishing an auxiliary bearer to be associated with a pre-existing bearer served by the base station 401A/401 B. The processing circuitry 420 is configured to identify the need for establishing the auxiliary bearer to be associated with the pre-existing bearer served by the base station 401A/401 B.

According to some of the example embodiments, the identifying 10 may be based on an evaluation of contents of a bearer establishment request of the pre-existing bearer. According to some of the example embodiments, the identifying 10 may be based on any one or more of, for example, (1) wireless terminal measurements, (2) a type of service used by the pre-existing bearer, (3) a location of a wireless terminal 101 associated with the pre-existing bearer, (4) a mobility history of the wireless terminal 101 associated with the pre-existing bearer, and (5) a hysteresis load analysis of base stations. It should be appreciated that the identifying may further involve any of the example embodiments discussed herein, for example the various forms of triggering as described at least in Figure 18 and under the sub-heading *'Auxiliary bearer establishment triggering'.*

### Example Operation 12:

According to some of the example embodiments, the identifying 10 may further comprise receiving 12 a request to establish the auxiliary bearer from a wireless terminal 101, radio controller 121 or mobility management node (e.g., a SGSN, S4-SGSN or MME) 115. The radio circuitry 410 may be configured to receive the request to establish the auxiliary bearer from the wireless terminal 101, radio controller 121 or the mobility management node 115.

### Operation 14:

The base station 401A/401B is further configured to send 14, to a network node, a request to establish the auxiliary bearer (e.g., message A of Figures 15 and 16). The radio circuitry 410 is configured to send, to the network node, the request to establish the auxiliary bearer. According to some of the example embodiments, network node may be a radio controller (e.g., SRC) 121 as illustrated in Figure 15. According to some of the example embodiments, the network node may be a PCRF 123 as illustrated in Figure 16.

### Example Operation 16:

According to some of the example embodiments, the base station 401A/401B is further configured to receive 16, from a mobility management node (e.g., a SGSN, S4-SGSN or a MME) 115 a request to establish a connection for a requesting bearer. The radio circuitry 410 is configured to receive, from the mobility management node (e.g., a SGSN, S4-SGSN or a MME) 115 the request to establish a connection for a requesting bearer. It should be appreciated that the message described in example operation 16 is message F as illustrated in Figures 15 and 16.

### Example Operation 18:

According to some of the example embodiments, upon receiving 16 the request, the base station 401A/401B may be further configured to determine 18 that the requesting bearer is the auxiliary bearer. The processing circuitry 420 is configured to determine that the requesting bearer is the auxiliary bearer.

According to some of the example embodiments, the determining 18 may be based on a predetermined period of time or a number of received bearer requests. For example, upon sending the request for the auxiliary bearer (e.g., message A in Figures 15 or 16), the base station 401A/401B may know approximately how much time is needed, or how many requests may be transmitted, before the request is sent by the mobility management node 115 (e.g., message H of Figures 15 or 16). Such a means of determination may be referred to as an implicit determination as described under at least the sub-heading *'Associating the pre-existing bearer with the auxiliary bearer'.*

According to some of the example embodiments, the determining 18 may be based on an information element (e.g., a token or a bearer ID of, for example, the pre-existing or primary bearer) comprised in the request. According to some of the example embodiments, the information element may be provided by the base station 401A/401B in the initial request (e.g., message A of Figures 15 and 16) and carried through to the request sent to the base station 401A/401B (e.g., message H of Figures 15 and 16). According to some of the example embodiments, the determining 18 may be based on a comparison of a QCl value of a pre-existing (e.g., primary EPS bearer) and a QCI value associated with the received request (e.g., message H of Figures 15 and 16) to establish a connection for the requesting bearer (e.g., the auxiliary bearer). It should be appreciated that the base station may be configured to associate a QCl value of the auxiliary bearer with the pre-existing or primary bearer. Such methods of determination may be referred to as an explicit determination as described under at least the sub-heading *'Associating the pre-existing bearer with the auxiliary bearer'.*

### Example Operation 20:

According to some of the example embodiments, upon the receiving 16 and the determining 18, the base station may be further configured to associate 20 the pre-existing bearer with the auxiliary bearer. The processing circuitry 420 is configured to associate the pre-existing bearer with the auxiliary bearer.

### Example Operation 22:

According to some of the example embodiments, the associating 20 may further comprise providing 22 a load sharing between the pre-existing bearer and the auxiliary bearer. The processing circuitry 420 is configured to provide the load sharing between the pre-existing bearer and the auxiliary bearer. It should be appreciated that load sharing shall be interpreted as a means of distributing user data packets on the auxiliary and pre-existing bearers. According to some of the example embodiments, the load sharing may be provided via a multi-path TCP. The load sharing may also consider other kinds of information, such as the radio interface load, hardware load, transport network load, etc., of the cells providing the auxiliary and pre-existing bearers.

### Example Operation 24:

According to some of the example embodiments, once the auxiliary bearer has been associated 20, the base station may be configured to perform a selective HO to assign the auxiliary bearer to another base station (e.g., a booster base station). The processing circuitry 420 may be configured to perform the selective HO to assign the auxiliary bearer to another base station.

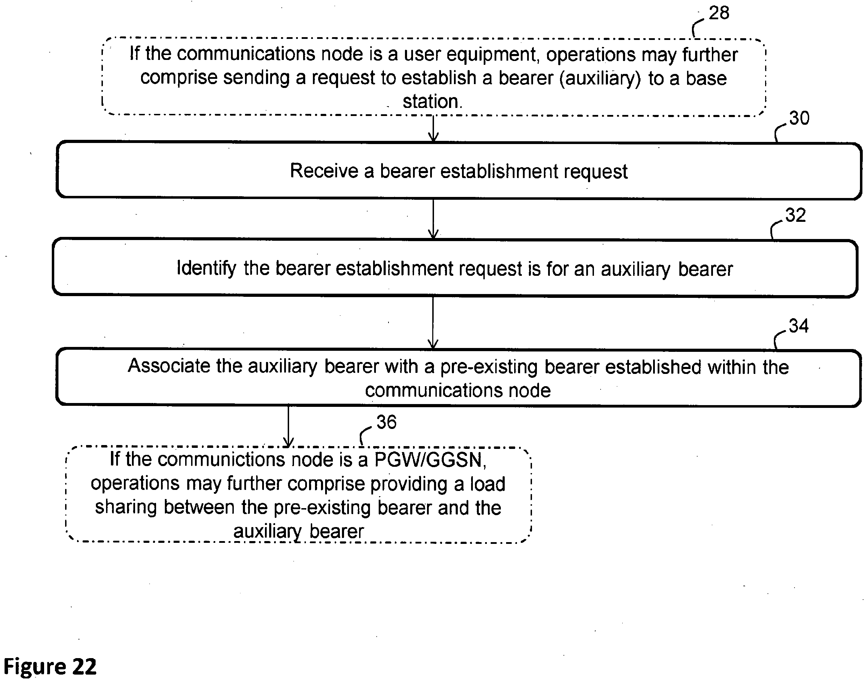

**Figure 22** is a flow diagram depicting example operations which may be taken by the communications node 101/119/123 as described herein for providing the establishment of an auxiliary bearer or for providing assistance for such an establishment. It should also be appreciated that Figure 22 comprises some operations which are illustrated with a solid border and some operations which are illustrated with a dashed border. The operations which are comprised in a solid border are operations which are comprised in the broadest example embodiment. The operations which are comprised in a dashed border are example embodiments which may be comprised in, or a part of, or are further operations which may be taken in addition to the operations of the boarder example embodiments. It should be appreciated that these operations need not be performed in order. Furthermore, it should be appreciated that not all of the operations need to be performed. The example operations may be performed in any order and in any combination. It should be appreciated that in the example embodiments provided below, the communications node may be either a PGW119, PCRF 123 or a wireless terminal 101.

### Example Operation 28:

According to some of the example embodiments, the communications node is a wireless terminal 101. In such example embodiments, the communications node is configured to send 28, to a serving base station 401A/401 B, a request for establishing an auxiliary bearer. The radio circuitry 501 is configured to send, to the serving base station 401A/401 B, the request for establishing the auxiliary bearer.

According to some of the example embodiments, the sending 28 may be performed as a result of any one or more of wireless terminal measurements, a type of service used by the pre-existing bearer, a location of a wireless terminal associated with the pre-existing bearer, and a mobility history of the wireless terminal associated with the pre-existing bearer.

### Example Operation 30:

The communications node 101/119/123 is configured to receive 30 a bearer establishment request. The radio circuitry 501 is configured to receive the bearer establishment request. According to some of the example embodiments, the communications node is a PGW 119 and the bearer establishment request is received from the PCRF 123 (e.g., message C of Figures 15 and 16). According to some of the example embodiments the communications node is a PCRF 123 and the bearer establishment request is received from the radio controller 121 or the base station 401 (e.g., message A or B of Figures 15 and 16, respectively). According to some of the example embodiments, the communications node is a wireless terminal 101 and the bearer establishment request is from a base station 401A/401 B (e.g., message H of Figures 15 and 16).

### Operation 32:

The communications node 101/119/123 is further configured to identify 32 the bearer establishment request is for an auxiliary bearer. The processing circuitry 503 is configured to identify the bearer establishment request is for an auxiliary bearer.

According to the example embodiments in which the communications node is a PGW 119 or a PCRF 123, the identifying 32 may be based on one or more of a comparison of a QoS value of a pre-existing bearer and the auxiliary bearer, a comparison of a QCl value of the pre-existing bearer and the auxiliary bearer, an information element comprised in a request for the re-existing and/or auxiliary bearer, and a comparison of TFTs associated with the pre-existing and auxiliary bearer.

According to the example embodiments in which the communications node is a wireless terminal 101, the identifying 32 may be based on one or more of a comparison of a QoS value of the pre-existing and the auxiliary bearer, a comparison of a QCl value of the pre-existing bearer and the auxiliary bearer, and an information element comprised in a request for the pre-existing and/or auxiliary bearer. It should be appreciated that the communications node may be configured to associate a QCI value of the auxiliary bearer with the pre-existing or primary bearer. It should further be appreciated that such indication is further described under at least the sub-heading *'Associating the pre-existing bearer with the auxiliary bearer'.*

### Operation 34:

The communications node 101/119/123 is further configured to associate 34 the auxiliary bearer with a pre-existing bearer established within the communications node. The processing circuitry 503 is configured to associate the auxiliary bearer with the pre-existing bearer established within the communications node.

### Example Operation 36:

According to some of the example embodiments in which the communications node is a PGW 119 or a PCRF 123, the associating 34 may further comprising providing 36 (e.g., providing rules or policies governing the load sharing, or actually providing such load sharing) a load sharing between the pre-existing bearer and the auxiliary bearer. The processing circuitry 503 is configured to provide the load sharing between the pre-existing bearer and the auxiliary bearer. According to some of the example embodiments, the load sharing may be provided via a multi-path TCP. The load sharing may also consider other kinds of information, such as the radio interface load, hardware load, transport network load, etc. of the cells providing the auxiliary and pre-existing bearers.

### General statements

It should be noted that although terminology from 3GPP LTE has been used herein to explain the example embodiments, this should not be seen as limiting the scope of the example embodiments to only the aforementioned system. Other wireless systems, comprising WCDMA, WiMax, UMB, WiFi and GSM, may also benefit from the example embodiments disclosed herein. It should also be appreciated that the term bearer (pre-existing, primary or auxiliary) represents a Data Radio Bearer (DRB) and/or an EPS Radio Bearer.

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, systems, and computer program products. It should be appreciated that the example embodiments presented herein may be practiced in any combination with each other.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

Also note that terminology such as user equipment should be considered as nonlimiting. A device or user equipment as the term is used herein, is to be broadly interpreted to comprise a radiotelephone having ability for Internet/intranet access, web browser, organizer, calendar, a camera (e.g., video and/or still image camera), a sound recorder (e.g., a microphone), and/or global positioning system (GPS) receiver; a personal communications system (PCS) user equipment that may combine a cellular radiotelephone with data processing; a personal digital assistant (PDA) that can comprise a radiotelephone or wireless communication system; a laptop; a camera (e.g., video and/or still image camera) having communication ability; and any other computation or communication device capable of transceiving, such as a personal computer, a home entertainment system, a television, etc. It should be appreciated that the term user equipment may also comprise any number of connected devices, wireless terminals or machine-to-machine devices.

The various example embodiments described herein are described in the general context of method steps or processes, which may be implemented in one aspect by a computer program product, embodied in a computer-readable medium, comprising computer-executable instructions, such as program code, executed by computers in networked environments. A computer-readable medium may comprise removable and non-removable storage devices comprising, but not limited to, Read Only Memory (ROM), Random Access Memory (RAM), compact discs (CDs), digital versatile discs (DVD), etc. Generally, program modules may comprise routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the embodiments being defined by the following claims.

## Claims

1. A method, in a base station **(401A, 401B),** for assisting in an establishment of an auxiliary bearer, the base station **(401A, 401B)** being comprised in a wireless network, the method **characterized by**:
identifying **(10)** a need for establishing an auxiliary bearer to be associated with a pre-existing bearer served by the base station **(401A, 401B),** wherein the auxiliary bearer and the pre-existing bearer are for a user data session; and
sending **(14),** to a network node **(121, 123),** a request to establish the auxiliary bearer.

2. The method of claim 1, further comprising:
receiving **(16),** from a mobility management node **(115),** a request to establish a connection for a requesting bearer;
determining **(18)** that the requesting bearer is the auxiliary bearer; and
associating **(20)** the auxiliary bearer with the pre-existing bearer.

3. The method of claim 2, wherein the determining **(18)** is based on a predetermined period of time or a number of received bearer requests.

4. The method of any of claims 2-3, wherein determining **(18)** is based on an information element comprised in the request.

5. The method of claim 4, wherein information element was provided by the base station **(401A, 401 B)** in the sending **(14).**

6. The method of any of claims 2-5, wherein the determining **(18)** is based on a comparison of a Quality of Service Class Identifier, QCI, value of a pre-existing bearer and a QCI value associated with the received request to establish a connection for a requesting bearer.

7. The method of any of claims 2-6, wherein the associating **(20)** further comprises providing **(22)** a load sharing between the pre-existing and the auxiliary bearer.

8. The method of claim 7, wherein one or more of the following apply:
the load sharing is provided via a multi-path Transmission Control Protocol, TCP;
and
the load sharing is based on a radio interface load, hardware load, and/or transport network load, of cells providing the auxiliary and pre-existing bearers.

9. The method of any of claims 2-8, further comprising performing **(24)** a selective handover to assign the auxiliary bearer to another base station.

10. A base station **(401A, 401B)** for assisting in an establishment of an auxiliary bearer, the base station **(401A, 401B)** being comprised in a wireless network, the base station **(401A, 401B) characterized by**:
processing circuitry **(420)** configured to identify a need for establishing an auxiliary bearer to be associated with a pre-existing bearer served by the base station **(401A, 401 B),** wherein the auxiliary bearer and the pre-existing bearer are for a user data session; and
radio circuitry **(410)** configured to send, to a network node **(121, 123),** a request to establish the auxiliary bearer.

11. A method, in a communications node **(101, 119, 123),** for assisting in an establishment of an auxiliary bearer, the communication node **(101, 119, 123)** being comprised in a wireless network, the method comprising receiving **(30)** a bearer establishment request, **characterized by**:
identifying **(32)** the bearer establishment request is for an auxiliary bearer; and
associating **(34)** said auxiliary bearer with a pre-existing bearer established within the communications node **(101, 119, 123),** wherein the auxiliary bearer and the pre-existing bearer are for a user data session.

12. The method of claim 11, wherein the communications node **(101, 119, 123)** is Packet Data Network Gateway, PGW, **(119)** and the bearer establishment request is received from the Policy Control and Charging Rules Function, PCRF **(123)** or wherein the communications node **(101, 119, 123)** is a PCRF **(123)** and the bearer establishment request is received from a radio controller **(121)** or a base station **(401).**

13. The method of claim 12, wherein identifying **(32)** is based on any one or more of:
- a comparison of a Quality of Service, QoS, value of the pre-existing bearer and the auxiliary bearer;
- a comparison of a Quality of Service Class Identifier, QCI, value of the pre-existing bearer and the auxiliary bearer;
- information element comprised in a request for the pre-existing and/or auxiliary bearer; and
- a comparison of traffic flow templates associated with the pre-existing and auxiliary bearer.

14. The method of any of claims 12-13, wherein the associating **(34)** further comprises providing **(36)** a load sharing between the pre-existing and the auxiliary bearer.

15. The method of claim 14, wherein one or more of the following apply:
the load sharing is provided via a multi-path Transmission Control Protocol, TCP; and
the load sharing is based on a radio interface load, hardware load, and/or transport network load, of cells providing the auxiliary and pre-existing bearers.

16. A communications node **(101, 119, 123)** for assisting in an establishment of an auxiliary bearer, the communication node **(101, 119, 123)** being comprised in a wireless network, the communications node **(101, 119, 123)** comprising radio circuitry **(501)** configured to receive a bearer establishment request, **characterized by**:
processing circuitry **(503)** configured to identify the bearer establishment request is for an auxiliary bearer; and
the processing circuitry **(503)** further configured to associate said auxiliary bearer with a pre-existing bearer established within the communications node, wherein the auxiliary bearer and the pre-existing bearer are for a user data session.

## Patentansprüche

1. Verfahren, in einer Basisstation **(401A**, **401B)**, zum Unterstützen eines Aufbaus eines Nebenträgers, wobei die Basisstation **(401A, 401B)** in einem drahtlosen Netzwerk enthalten ist, wobei das Verfahren **gekennzeichnet ist durch**:
Identifizieren **(10)** eines Bedarfs nach einem Aufbau eines Nebenträgers, der mit einem vorher vorhandenen Träger, der von der Basisstation **(401A, 401B)** bedient wird, assoziiert werden soll, wobei der Nebenträger und der vorher vorhandene Träger für eine Nutzerdatensitzung vorgesehen sind; und
Senden **(14)** einer Anfrage an einen Netzwerkknoten **(121, 123),** um den Nebenträger aufzubauen.

2. Verfahren nach Anspruch 1, weiter umfassend:
Empfangen **(16),** von einem Mobilitätsverwaltungsknoten **(115),** einer Anfrage, um eine Verbindung für einen anfragenden Träger aufzubauen;
Feststellen **(18),** dass der anfragende Träger der Nebenträger ist; und
Assoziieren **(20)** des Nebenträgers mit dem vorher vorhandenen Träger.

3. Verfahren nach Anspruch 2, wobei das Feststellen **(18)** auf einer vorher festgelegten Zeitspanne oder einer Anzahl von empfangenen Anfragen bezüglich eines Trägers basiert.

4. Verfahren nach einem der Ansprüche 2-3, wobei das Feststellen **(18)** auf einem Informationselement basiert, das in der Anfrage enthalten ist.

5. Verfahren nach Anspruch 4, wobei das Informationselement von der Basisstation **(401A, 401B)** beim Senden **(14)** bereitgestellt wurde.

6. Verfahren nach einem der Ansprüche 2-5, wobei das Feststellen **(18)** auf einem Vergleich eines Wertes eines Klassenidentifikators bezüglich einer Dienstgüte, QCI, eines vorher vorhandenen Trägers mit einem QCI-Wert, der mit der empfangenen Anfrage, um eine Verbindung für einen anfragenden Träger aufzubauen, assoziiert ist, basiert.

7. Verfahren nach einem der Ansprüche 2-6, wobei das Assoziieren **(20)** weiter umfasst: Bereitstellen **(22)** einer Lastteilung zwischen dem vorher vorhandenen Träger und dem Nebenträger.

8. Verfahren nach Anspruch 7, wobei eines oder mehreres des Folgenden zutrifft:
die Lastteilung wird mittels eines Mehrpfad-Übertragungssteuerungsprotokolls, TCP, bereitgestellt; und
die Lastteilung basiert auf einer Last einer Funkschnittstelle, Hardwarelast, und/oder Last eines Transportnetzwerks von Zellen, die den Nebenträger und den vorher vorhandenen Träger bereitstellen.

9. Verfahren nach einem der Ansprüche 2-8, weiter umfassend: Durchführen **(24)** einer selektiven Übergabe, um den Nebenträger einer anderen Basisstation zuzuweisen.

10. Basisstation **(401A, 401B)** zum Unterstützen eines Aufbaus eines Nebenträgers, wobei die Basisstation **(401A, 401B)** in einem drahtlosen Netzwerk enthalten ist, wobei die Basisstation **(401A, 401B) gekennzeichnet ist durch**:
eine Verarbeitungsschaltung **(420),** die konfiguriert ist, einen Bedarf nach einem Aufbau eines Nebenträgers zu identifizieren, der mit einem vorher vorhandenen Träger, der von der Basisstation **(401A, 401B)** bedient wird, assoziiert werden soll, wobei der Nebenträger und der vorher vorhandene Träger für eine Nutzerdatensitzung vorgesehen sind; und
eine Funkschaltung **(410),** die konfiguriert ist, eine Anfrage an einen Netzwerkknoten **(121, 123)** zu senden, um den Nebenträger aufzubauen.

11. Verfahren, in einem Kommunikationsknoten **(101, 119, 123)** zum Unterstützen eines Aufbaus eines Nebenträgers, wobei der Kommunikationsknoten **(101, 119, 123)** in einem drahtlosen Netzwerk enthalten ist, wobei das Verfahren umfasst: Empfangen **(30)** einer Anfrage bezüglich eines Aufbaus eines Trägers, wobei das Verfahren **gekennzeichnet ist durch**:
Identifizieren **(32),** dass die Anfrage bezüglich eines Aufbaus eines Trägers für einen Nebenträger ist; und
Assoziieren **(34)** des Nebenträgers mit einem vorher vorhandenen Träger, der innerhalb des Kommunikationsknotens **(101, 119, 123)** aufgebaut wurde, wobei der Nebenträger und der vorher vorhandene Träger für eine Nutzerdatensitzung vorgesehen sind.

12. Verfahren nach Anspruch 11, wobei der Kommunikationsknoten **(101, 119, 123)** ein Netzwerk-Gateway bezüglich Packetdaten, PGW, **(119)** ist und die Anfrage bezüglich eines Aufbaus eines Trägers von der Funktion bezüglich einer Richtlinienkontrolle und Berechnungsregeln, PCRF **(123)** empfangen wird oder wobei der Kommunikationsknoten **(101, 119, 123)** eine PCRF ist und die Anfrage bezüglich eines Aufbaus eines Trägers von einer Funksteuerung **(121)** oder einer Basisstation **(401)** empfangen wird.

13. Verfahren nach Anspruch 12, wobei das Identifizieren **(32)** auf einem oder mehreren des Folgenden basiert:
- einem Vergleich eines Wertes bezüglich einer Dienstgüte, QoS, des vorher vorhandenen Trägers und des Nebenträgers;
- einem Vergleich eines Wertes eines Klassenidentifikators bezüglich einer Dienstgüte, QCI, des vorher vorhandenen Trägers und des Nebenträgers;
- einem Informationselement, das in einer Anfrage nach dem vorher vorhandenen Träger und/oder dem Nebenträger enthalten ist; und
- einem Vergleich von Verkehrsflussvorlagen, die mit dem vorher vorhandenen Träger und dem Nebenträger assoziiert sind.

14. Verfahren nach einem der Ansprüche 12-13, wobei das Assoziieren **(34)** weiter umfasst: Bereitstellen **(36)** einer Lastteilung zwischen dem vorher vorhandenen Träger und dem Nebenträger.

15. Verfahren nach Anspruch 14, wobei eines oder mehreres des Folgenden zutrifft:
die Lastteilung wird mittels eines Mehrpfad-Übertragungssteuerungsprotokolls, TCP, bereitgestellt; und
die Lastteilung basiert auf einer Last einer Funkschnittstelle, HardwareLast, und/oder Last eines Transportnetzwerks von Zellen, die den Nebenträger und den vorher vorhandenen Träger bereitstellen.

16. Kommunikationsknoten **(101, 119, 123)** zum Unterstützen eines Aufbaus eines Nebenträgers, wobei der Kommunikationsknoten **(101, 119, 123)** in einem drahtlosen Netzwerk enthalten ist, wobei der Kommunikationsknoten **(101, 119, 123)** eine Funkschaltung **(501)** umfasst, die konfiguriert ist, um eine Anfrage bezüglich eines Aufbaus eines Trägers zu empfangen, **gekennzeichnet durch**:
eine Verarbeitungsschaltung **(503),** die konfiguriert ist, um zu identifizieren, dass die Anfrage bezüglich eines Aufbaus eines Trägers für einen Nebenträger ist; und
wobei die Verarbeitungsschaltung **(503)** weiter konfiguriert ist, um den Nebenträger mit einem vorher vorhandenen Träger, der innerhalb des Kommunikationsknotens aufgebaut ist, zu assoziieren, wobei der Nebenträger und der vorher vorhandene Träger für eine Nutzerdatensitzung vorgesehen sind.

## Revendications

1. Procédé, dans une station de base (401A, 401B), pour aider à un établissement d'un support auxiliaire, la station de base (401A, 401B) étant comprise dans un réseau sans fil, le procédé **caractérisé par** :
l'identification (10) d'un besoin pour établir un support auxiliaire devant être associé à un support préexistant desservi par la station de base (401A, 401B), où le support auxiliaire et le support préexistant sont destinés à une session de données d'utilisateur ; et
l'envoi (14), à un noeud de réseau (121, 123), d'une demande pour établir le support auxiliaire.

2. Procédé selon la revendication 1, comprend en outre :
la réception (16), en provenance d'un noeud de gestion de mobilité (115), d'une demande pour établir une connexion pour un support demandeur ;
la détermination (18) que le support demandeur est le support auxiliaire ; et
l'association (20) du support auxiliaire au support préexistant.

3. Procédé selon la revendication 2, dans lequel la détermination (18) est basée sur une période de temps prédéterminée ou un nombre de demandes de support reçues.

4. Procédé selon l'une quelconque des revendications 2 à 3, dans lequel la détermination (18) est basée sur un élément d'information compris dans la demande.

5. Procédé selon la revendication 4, dans lequel l'élément d'information a été fourni par la station de base (401A, 401B) lors de l'envoi (14).

6. Procédé selon l'une quelconque des revendications 2 à 5, dans lequel la détermination (18) est basée sur une comparaison d'une valeur d'Identificateur de classe de qualité de service, QCI, d'un support préexistant et d'une valeur QCI associée à la demande reçue pour établir une connexion pour un support demandeur.

7. Procédé selon l'une quelconque des revendications 2 à 6, dans lequel l'association (20) comprend en outre la fourniture (22) d'un partage de charge entre le support préexistant et l'auxiliaire.

8. Procédé selon la revendication 7, dans lequel un ou plusieurs de ce qui suit s'applique :
le partage de charge est fourni via un Protocole de contrôle de transmission, TCP, multi-trajet ; et
le partage de charge est basé sur une charge d'interface radio, une charge matérielle, et/ou une charge de réseau de transport, de cellules fournissant les supports auxiliaire et préexistant.

9. Procédé selon l'une quelconque des revendications 2 à 8, comprenant en outre l'exécution (24) d'un transfert sélectif pour assigner le support auxiliaire à une autre station de base.

10. Station de base (401A, 401B) pour aider à un établissement d'un support auxiliaire, la station de base (401A, 401B) étant comprise dans un réseau sans fil, la station de base (401A, 401B) **caractérisée par** :
un ensemble de circuits de traitement (420) configuré pour identifier un besoin pour établir un support auxiliaire devant être associé à un support préexistant desservi par la station de base (401A, 401B), où le support auxiliaire et le support préexistant sont destinés à une session de données d'utilisateur ; et
un ensemble de circuits radio (410) configuré pour envoyer, à un noeud de réseau (121, 123), une demande pour établir le support auxiliaire.

11. Procédé, dans un noeud de communications (101, 119, 123) pour aider à un établissement d'un support auxiliaire, le noeud de communications (101, 119, 123) étant compris dans un réseau sans fil, le procédé comprenant la réception (30) d'une demande d'établissement de support, **caractérisé par** :
l'identification (32) que la demande d'établissement de support est destinée à un support auxiliaire ; et
l'association (34) dudit support auxiliaire à un support préexistant établi à l'intérieur du noeud de communications (101, 119, 123), où le support auxiliaire et le support préexistant sont destinés à une session de données d'utilisateur.

12. Procédé selon la revendication 11, dans lequel le noeud de communications (101, 119, 123) est une Passerelle de réseau de données par paquets, PGW, (119) et la demande d'établissement de support est reçue en provenance de la Fonction de règles de contrôle de politique et de taxation, PCRF (123) ou dans lequel le noeud de communications (101, 119, 123) est une PCRF (123) et la demande d'établissement de support est reçue en provenance d'un contrôleur radio (121) ou d'une station de base (401).

13. Procédé selon la revendication 12, dans lequel l'identification (32) est basée sur l'un quelconque ou plusieurs parmi :
- une comparaison d'une valeur de Qualité de service, QoS, du support préexistant et du support auxiliaire ;
- une comparaison d'une valeur d'Identificateur de classe de qualité de service, QCI, du support préexistant et du support auxiliaire ;
- un élément d'information compris dans une demande pour le support préexistant et/ou auxiliaire ; et
- une comparaison de modèles de flux de trafic associés au support préexistant et auxiliaire.

14. Procédé selon l'une quelconque des revendications 12 à 13, dans lequel l'association (34) comprend en outre la fourniture (36) d'un partage de charge entre le support préexistant et l'auxiliaire.

15. Procédé selon la revendication 14, dans lequel un ou plusieurs de ce qui suit s'applique :
le partage de charge est fourni via un Protocole de contrôle de transmission, TCP, multi-trajet ; et
le partage de charge est basé sur une charge d'interface radio, une charge matérielle, et/ou une charge de réseau de transport, de cellules fournissant les supports auxiliaire et préexistant.

16. Noeud de communications (101, 119, 123) pour aider à un établissement d'un support auxiliaire, le noeud de communications (101, 119, 123) étant compris dans un réseau sans fil, le noeud de communications (101, 119, 123) comprenant un ensemble de circuits radio (501) configuré pour recevoir une demande d'établissement de support, **caractérisé par** :
un ensemble de circuits de traitement (503) configuré pour identifier que la demande d'établissement de support est destinée à un support auxiliaire ; et
l'ensemble de circuits de traitement (503) en outre configuré pour associer ledit support auxiliaire à un support préexistant établi à l'intérieur du noeud de communications, où le support auxiliaire et le support préexistant sont destinés à une session de données d'utilisateur.
